# EUROPEAN PATENT SPECIFICATION

(11) **EP 4 120 701 B1**
(45) Date of publication and mention of the grant of the patent: **01.05.2024**
(21) Application number: 21186156.2
(22) Date of filing: 16.07.2021
(51) Int. Cl.: H04W 4/02, H04W 4/80, H04W 52/02

(54) **AN ENERGY EFFICIENT PROXIMITY AWARENESS DEVICE**
ENERGIEEFFIZIENTE NÄHERUNGSBEWUSSTSEINSVORRICHTUNG
DISPOSITIF DE SENSIBILISATION À LA PROXIMITÉ À FAIBLE CONSOMMATION D'ÉNERGIE

(43) Date of publication of application: 18.01.2023
(73) Proprietor: Lopos BV, 9000 Gent (BE)
(72) Inventor: Bauwens, Jan, 9260 Wichelen (BE); Jooris, Bart, 8460 Oudenburg (BE); Rossey, Jen, 9070 Destelbergen (BE)
(74) Representative: IP HILLS NV

(56) References cited:
- US-A1- 2020 106 877
- US-A1- 2020 305 142

## Description

### Field of the Invention

The present invention generally relates to proximity awareness technology, i.e. devices that measure and track the location of or the distance between humans, animals, and/or objects for various applications. More particularly, the invention concerns energy efficient proximity awareness technology using wireless devices or tags attached to humans, animals or objects that are tracked with reduced power consumption.

### Background of the Invention

Accurate localization of humans, animals or objects and distance monitoring between humans, animals or objects, both indoor and outdoor, with centimeter accuracy has gained attraction in many applications. The monitoring of distance between humans can for instance be exploited in social distance warning systems. A system that continuously monitors the distance between humans tagged with wireless devices, may for instance alert people that have spent a predefined minimum amount of time at a distance smaller that a predefined safety distance from a person that turns out to carry an infectious virus, like for instance COVID19, influenza, or Ebola. This way, infected humans can be tested faster, and spreading of the infection can be slowed down through adequate protective measures like quarantining infected persons. In case of an epidemic or pandemic, physical and social interaction between humans sharing the same working area, using public transport, attending sports or cultural events, etc., can be monitored to ensure everyone's safety.

Distance monitoring between humans, animals and/or objects finds other applications like for instance collision warning on a construction site or working area. If humans and objects like racks, cranes, forklifts, robots, etc. are continuously tracked, dangerous situations like an upcoming collision between a forklift and human operator may be alerted, preventing damage to objects, and injury or even death of humans or animals.

Satellite based localization systems, like for instance the Global Positioning System, abbreviated GPS, are known to track the location of people and objects like cars, airplanes, etc. for many years. These satellite-based systems however do not provide centimetre accuracy and they are not suitable for indoor applications or for use in environments that suffer from signal obstruction.

Alternative localization systems typically rely on wireless devices or tags attached to humans, animals or objects to be tracked. Such systems may comprise fixed infrastructure, like for instance wire-powered anchor nodes at predefined positions, such that the location of a wireless device can be determined from its relative position to one or plural fixed anchor nodes. Alternatively or supplementary, such localization systems may rely on time-of-flight (ToF) technology that allows to measure the time for a radio-transmitted signal to travel back and forth between two wireless devices, in order to determine the distance between these devices for applications wherein knowledge of the relative location of devices is sufficient, like for instance collision warning. Alternatively or supplementary, techniques such as angle-of-arrival (AoA) technology can determine the angle between these devices, replacing or supplementing the distance information. Similarly, alternatively or supplementary, techniques such as time-difference of arrival (TdoA) can be used wherein the time of arrival of a specific signal is calculated at a plurality of physically separate receiving devices. The wireless devices or tags attached to humans, animals or objects are battery-operated and therefore need to be reloaded regularly.

The article "Wi-PoS: A Low-Cost, Open Source Ultra-Wideband (UWB) Hardware Platform with Long Range Sub-GHz Backbone" from the authors Ben Van Herbruggen, Bart Jooris, Jen Rossey, Matteo Ridolfi, Nivola Macoir, Quinten Van den Brande, Sam Lemey and Eli De Poorter describes a system for accurate indoor localization based on fixed anchor nodes and wireless devices comprising Ulta-Wideband transceivers (abbreviated UWB transceivers). UWB transceivers allow to transmit a high bandwidth signal - the signal has a typical bandwidth in the range of 500 MHz - using a rather low transmission power. Thanks to its high bandwidth, UWB receivers can receive and decode the UWB signals even if the UWB signals happen to stay below the noise level resulting from interfering wireless technologies like WiFi or WiMAX. Proximity awareness devices relying on UWB transceivers as described in the article of Van Herbruggen et al. can determine the distance between two devices with an accuracy of 20 centimetres and a range of up to 60 metres in industrial environments due to its high bandwidth (providing robustness against interference) and its short communication pulses (the pulse length below 1 nanosecond allows accurate determination of the direct path length between two devices from the time-of-flight). UWB transceivers however come at the cost of high energy consumption: in particular the decoding of the high bandwidth, interference-plagued signal at the UWB transceiver is very demanding in terms of power consumption. In the system described by Van Herbruggen et al., the energy efficiency is improved by provisioning a second wireless technology, the so-called sub-GHz transceiver. This sub-GHz transmission consumes less power than UWB transmission, and is used to discover wireless devices, i.e. to detect the presence of wireless devices. The sub-GHz transceivers bring the advantage that the UWB transceivers need no longer be always-on to listen for the presence of wireless devices leading to a substantial power consumption reduction. The second, sub-GHz transceiver in other words allows to operate the first, UWB transceiver according to a duty cycle. Anchor nodes or wireless devices that are not ranging, can put their UWB transceiver in a sleep state, and only listen to the sub-GHz spectrum.

Despite the fact that the second transceiver in wireless devices in the system described by Van Herbruggen et al. reduces the power consumption on average by a factor 10, battery-operated wireless devices in such system have a battery time somewhere between 8 and 16 hours. When used to monitor human operators in a working environment or when used to monitor forklifts for collision avoidance, these devices still must be charged daily. In particular in working environments, it is desired that battery-operated wireless devices attached to human operators or to objects that are tracked, have a battery life that spans a few work shifts, for instance 5 work shifts. This would allow an operator working 5 days per week to charge his wireless proximity awareness device once a week. Further, whereas current proximity awareness devices are still rather voluminous, there is a general desire to reduce the size of these devices such that they can be integrated in other wearables like a smartwatch, a ring, glasses, etc. Miniaturizing the wireless proximity awareness devices will involve reducing the size of batteries therein, hence reducing the energy storage capacity. Consequently, the desire to extend the battery life and the desire to reduce the size of devices continue to drive the demand for more energy efficient proximity awareness technology.

United States Patent Application US 2020/0106877 A1 entitled "Ranging Between Mobile Devices" describes a mobile device that includes ranging circuitry to determine the distance to another mobile device. The mobile device comprises a first transceiver configured to implement a ranging protocol to determine the distance to a neighbouring mobile device (UWB transceiver mentioned in paragraph [0066]). The mobile device comprises a second transceiver to detect presence of a neighbouring mobile device (BLE transceiver mentioned in paragraph [0157]). Paragraph [0073] refers to a duty cycle for broadcasting advertisement signals and a scan duty cycle to regularly scan the other advertising channels in order to detect other neighbouring devices that want to connect. Paragraph [0190] describes that the wireless circuitry of the BLE transceiver is turned on periodically to look for incoming advertisement messages. Paragraph [0079] explains that the UWB transceiver is turned on a time offset dt_tx after an advertisement signal is sent. The offset dt_tx is part of ranging settings included in the advertisement signal.

United States Patent Application US 2020/0305142 A1 entitled "Electronic Device Providing Periodic Positioning Communication via Wireless Communication Channel" describes an electronic device that includes an UWB transceiver to establish communication with an external electronic device, perform positioning communication with the external electronic device and recognize a distance between the electronic device and external electronic device. Paragraphs [0064] and [0065] suggest that a BLE transceiver is used for advertisement and detecting presence of an external electronic device. Paragraph [0065] mentions "periodically scanning" which refers to standard operation of BLE transceivers that periodically switch between communicating over a channel and scanning other channels, without being switched-off. Further according to paragraph [0065], the UWB transceiver is enabled when the signal strength received at the BLE interface is greater than a threshold value. It is not specified when the UWB interface is again disabled.

It is an objective of the present invention to provide a proximity awareness device that mitigates the above-defined shortcomings of existing devices. More precisely, it is an objective of the present invention to provide a proximity awareness device that is more energy efficient without sacrificing accuracy or range.

### Summary of the Invention

According to embodiments of the present invention, the above defined objective is realized by a proximity awareness device as defined by claim 1, adapted to establish proximity awareness on neighbouring devices similar to the proximity awareness device.

Thus, to improve the energy efficiency of the proximity awareness device, i.e. a wearable or taggable battery-operated device that determines its distance and/or orientation towards other proximity awareness devices with an accuracy below 50 centimetres, a second transceiver or second radio is foreseen in addition to a first transceiver or first radio. The second transceiver is less power consuming and is used to discover nearby proximity awareness devices through a neighbour discovery protocol, whereas the first transceiver is used for ranging, i.e. the process of determining the instant distance or angle between the proximity awareness device and a discovered nearby proximity awareness device. In order to improve the energy efficiency (and battery life), the first transceiver is duty cycled such that it is activated only when ranging with a nearby device and stays in a sleep state or low power state when no ranging is performed. In particular when ranging is required with high accuracy (for instance centimetre accuracy) and over a large range (for instance up to 60 metres), a first transceiver is required that consumes substantial power and therefore drains the battery. Duty cycling the first transceiver therefore is essential to energy efficient operation of the proximity awareness device. The first duty cycle for the first transceiver is made possible by transferring execution of the discovery protocol to a second transceiver that consumes less power. However, continuously sending discovery messages over long distances via a second transceiver, even if the second transceiver consumes less power than the first transceiver, will still unnecessarily drain the battery of the proximity awareness device. Therefore, according to the present invention, the second transceiver that implements the discovery protocol will not be kept on continuously but will periodically be turned off according to a second duty cycle to further safe energy and increase the battery lifetime.

Discovery of neighbours is executed in a contention window, i.e. a time window that forms part of a bigger timeframe and that is reserved for neighbour discovery. In a contention window, only one proximity awareness gets the chance to update its proximity table, i.e. its knowledge of presence of neighbour devices: the contention winner. All other proximity awareness devices, the contention losers, will have to wait for another contention window and become the winner of that contention window in order to get a chance to update their proximity table. From the start of the contention window, each proximity awareness device waits a random time period (or pseudorandom time period) determined individually by each device. When its random wait time is over, the device broadcasts a probe signal. The first device to send a probe signal is the contention winner, all other devices are contention losers. During the wait period, the second transceiver can operate in a low power mode wherein its transmitter is in sleep mode while its receiver is listening for probe signals from other devices. The probe signal broadcasted by the contention winner contains at least time information indicating the time whereon the contention winner shall broadcast a second message, named the announcement message. In between receipt of the probe signal and the time whereon the announcement message will be sent by the contention winner, the contention losers can update their proximity tables (for instance adding the contention winner to the table of neighbours) and turn their second transceiver in a low power mode wherein both the transmitter and receiver of the second transceiver are asleep. The contention winner in the meantime prioritizes its neighbour devices and determines a ranging schedule wherein timeslots that form part of a ranging time window are assigned to prioritized neighbour devices, i.e. neighbour devices for whom the contention winner prefers to get an update on the distance and/or angle. The ranging time window is a second time window that forms part of the above-mentioned bigger timeframe. This ranging time window can be used exclusively by the contention winner in order to update the proximity information on its neighbours. The contention winner thereto shall execute a ranging protocol, typically a time-of-flight measurement, with neighbour devices it can select. The ranging protocol with different neighbour devices must be executed in different timeslots. Consequently, the contention winner must decide with which neighbour it prefers to range in each timeslot of the ranging window. This prioritization of neighbours results in a schedule of neighbours assigned to the different timeslots of the upcoming ranging window, and this ranging schedule is broadcasted by the contention winner as part of the announcement message at the time indicated in the probe signal. This way, all neighbour devices are informed on the ranging schedule. After having broadcasted the announcement message, the contention winner's second transceiver can return to a low power mode to further save energy. In the alternative scenario wherein the proximity awareness device becomes a contention loser, the second transceiver can be turned into sleep mode after having received the probe signal and having extracted the time information for the announcement signal therefrom. At the time of the announcement signal, the contention loser re-activates its second transceiver (or at least the receiver thereof) to receive the announcement signal and to extract therefrom the ranging schedule. From the ranging schedule, the contention loser can determine if it has been selected by the contention winner for ranging and if so, during which timeslot of the ranging window it can range with the contention winner in order to update its proximity information (e.g. distance and angle) for the contention winner. After having received the announcement signal, the contention losers can turn their second transceiver off to further save energy. It is noticed that in alternative embodiments of the invention, the energy consumption may even further be reduced by combining the content of the probe signal and announcement signal and having the contention winner send the combined content using the payload of a single packet. In such embodiments, the contention winner must decide upfront, based on earlier collected information, which neighbour devices are selected for ranging. The timing information embedded in the combined probe and announcement signal in such embodiments of the invention indicates the start of the ranging schedule.

In embodiments of the proximity awareness device according to the invention, as defined by claim 2, the second duty cycle is configured at least based on a minimum discovery rate derived from application requirements of an application wherein the proximity awareness device is used.

Indeed, the second duty cycle, i.e. the periodic switching of the second transceiver between a full power state in order to perform the discovery protocol and a low power state wherein either its transmitter, its receiver or both are switched off, preferably depends on the context or application wherein the proximity awareness device is used. As an example, a proximity awareness device that is used on a high-speed forklift or truck for collision avoidance at a workplace requires a faster update of its neighbour presence knowledge than a proximity awareness device that is worn by a person for human contact tracing in the context of social distance alerting for virus infection prevention. The minimum discovery rate set by the application or context wherein a proximity awareness device is used consequently may be used to configure the wake-up frequency of the second transceiver to perform the discovery protocol in order to detect presence of new neighbour proximity awareness devices.

In embodiments of the proximity awareness device according to the invention, as defined by claim 3, the second duty cycle is configured based on a combination of one or more of:
- the type of the proximity awareness device;
- the application wherein the proximity awareness device is used;
- the moving speed of the proximity awareness device;
- an activity level of the proximity awareness device;
- a previous determination of distance between the proximity awareness device and the neighbouring devices;
- a relative distance increase or decrease between the proximity awareness device and one or more neighbouring devices;
- duration since a previous determination of distance between the proximity awareness device and the neighbouring devices.

Indeed, in order to further optimize the energy efficiency of the proximity awareness device, the second duty cycle and neighbour discovery protocol are preferably made adaptive such that discovery packets are sent at a variable rate that depends on the type and behaviour of the device and/or depends on the type and behaviour of neighbouring devices. The type of device, e.g. collision avoidance vs. social distancing, may be used to configure the second duty cycle and neighbour discovery rate. Also the application wherein the device is used, e.g. safety at a workplace where high-speed trucks are used vs. contact tracing for virus spread prevention, may influence the configuration of the second duty cycle and its neighbour discovery rate. The amount of time the second transceiver spends in sleep mode or low power mode, and consequently the amount of time during which the proximity awareness device cannot discover other devices and/or cannot be discovered by other devices, further preferably depends on the activity level, for instance the moving speed, of the proximity awareness device and the activity level, for instance the relative distance increase or decrease, of already detected nearby devices. The duration since a previous determination and/or the actual distance or angle measured during a previous determination are further parameters that may be exploited to configure the duty cycle of the second transceiver and the neighbour discovery rate. Through an automated configuration algorithm, discovery speed and discovery probability may be trade-off against energy consumption by the second, low-power, discovery transceiver.

In embodiments of the proximity awareness device according to the invention, as defined by claim 4, the second transceiver is configured to operate in a low power mode between transmission of the probe signal and transmission of the announcement signal.

Indeed, as indicated above, the energy efficiency of the proximity awareness device can be further improved if the proximity awareness device as contention winner turns its second transceiver in sleep mode or low power mode in between broadcasting the probe signal and broadcasting the announcement signal. The proximity awareness device only has to determine the ranging schedule in this period but needs no power to transmit or receive signals via the second transceiver, because it will not transmit signals itself and also neighbouring devices will not transmit signals as contention losers.

In embodiments of the proximity awareness device according to the invention, as defined by claim 5, the second transceiver is dynamically adapted, based on the timing information extracted from the probe signal, to operate in a low power mode between receiving the probe signal and receiving the announcement signal.

This way, as indicated above, the energy efficiency of the proximity awareness device is further enhanced as the proximity awareness device as contention loser shall turn its second transceiver in sleep mode or low power mode between receipt of the probe signal from the contention winner and receipt of the announcement signal from the contention winner, the timing of the latter being known by the contention loser through information contained in the probe signal. In between receipt of the probe signal and receipt of the announcement signal, both the transmitter and receiver of the second transceiver can be turned off as the contention loser is not expected to send any signals and the contention winner will send no in-between signals that must be listened for.

In embodiments of the proximity awareness device according to the present invention, as defined by claim 6, in order to implement the discovery protocol, the second transceiver is further configured to:
- transmit the probe signal multiple times within the contention interval depending on the duty cycle of the receiver in the second transceiver of the neighbouring devices, the probe signal having a predetermined length in time.

By transmitting the same probe signal multiple times within the contention interval, the energy efficiency of the proximity awareness devices is further improved. During the contention interval, the second transceivers of the proximity awareness devices can implement low power listening: instead of keeping the receiver of the second transceiver permanently on to listen for the probe signal of the contention winner, the receiver of the second transceiver can stay in low power mode and only scan at regular time instants if the received signal power exceeds a certain threshold. When the received signal power exceeds the threshold, the receiver of the second transceiver can be full powered to listen for a following transmission of the probe signal. For the contention losing neighbours it is sufficient to receive one of the probe signals as the timing information for the announcement signal can be extracted therefrom. It is noticed that the timing information for the announcement signal may be an offset or relative timing vis-à-vis receipt of the probe signal. The timing information for the announcement signal may for instance be an amount of microseconds to be counted from receipt of the probe signal. Consequently, multiple copies of the probe signal sent consecutively by the contention winner, may differ from each other in that the (relative) timing information for the announcement signal is updated. In order to ensure that a contention losing device is not missing all probe signals sent by the contention winner, the contention winner must transmit the different copies of the probe signal at intervals depending on the duty cycle of the receiver and the probe signal must have a predetermined length in time that exceeds the time interval between listening instants in the duty cycle of the receiver.

In embodiments of the proximity awareness device according to the invention, as defined by claim 7, the second transceiver is configured to:
- listen at listening instants, the time in between successive listening instants not exceeding said predetermined length in time of the probe signal;
- operate in a low power mode in between listening instants as long as the energy received at a listening instant stays below a predetermined energy threshold and as long as no announcement signal is expected;
- operate in full power mode to receive a further transmission of the probe signal when the energy received at a listening instant exceeds the predetermined energy threshold.

This way, as already explained above, the second transceiver implements low power listening in the contention phase resulting in further improvement of the energy efficiency of the proximity awareness device. The receiver of the second, low-power, discover transceiver can stay in low power mode during the first part of the contention window. The receiver only has to sense the received power level at regular time instants. As soon as the sensed received power level exceeds the predefined threshold, it assumes that a probe signal was sent by a contention winning device. At this time, it will power on the receiver of its second transceiver and await reception of a retransmission of the probe signal to extract therefrom the time information for the announcement signal. The gain in power consumption is substantial as the receiver of the second transceiver no longer has to be full powered throughout the entire random wait period from the start of each contention window up to the random instant in time where the contention winner sends the probe signal.

In embodiments of the proximity awareness device according to the present invention, as defined by claim 8, the random wait period is determined randomly between a minimum time period and a maximum time period, the minimum time period and the maximum time period being configured or being dynamically adapted based on a combination of one or more of:
- the type of the proximity awareness device;
- the application wherein the proximity awareness device is used;
- the moving speed of the proximity awareness device;
- an activity level of the proximity awareness device;
- a previous determination of distance between the proximity awareness device and the neighbouring devices;
- a relative distance increase or decrease between the proximity awareness device and one or more neighbouring devices;
- duration since a previous determination of distance between the proximity awareness device and the neighbouring devices.

The random wait period is the period that a proximity awareness device waits from the start of the contention window to send the probe signal and become contention winner. The contention winner gets the exclusive right to determine the ranging schedule, i.e. to determine which devices are allowed to measure their relative distance and/or orientation in which timeslots of the ranging time window. The probability for a proximity awareness device to become contention winner is increased when the wait period of that proximity awareness device is randomly determined within range of smaller values. In other words, by reducing the minimum time period and/or by reducing the maximum time period in between which the waiting period is selected randomly or pseudo-randomly, the probability for the proximity awareness device to become contention winner increases, thus resulting in a proximity awareness time that is prioritized over other proximity awareness devices to send out the announcement that determines the ranging schedule. The other way round, increasing the minimum time period and/or the maximum time period in between which the random wait period must be selected, reduces the probability for a proximity awareness device to become contention winner, thus saving energy as the proximity awareness device will less frequently range. The minimum time period and maximum time period for random selection of the wait period can thus be configured to further optimize the energy efficiency of the proximity awareness device in view of the type and behaviour of the device and/or the type and behaviour of neighbouring devices. The type of device, e.g. collision avoidance vs. social distancing, may be used to configure the minimum time period and maximum time period, and therefore the ranging frequency. Also the application wherein the device is used, e.g. safety at a workplace where high-speed trucks are used vs. contact tracing for virus spread prevention, may influence the minimum time period and maximum time period, and therefore the ranging frequency. The pace at which proximity information on neighbours is updated further preferably depends on the activity level, for instance the moving speed, of the proximity awareness device and the activity level, for instance the relative distance increase or decrease, of already detected nearby devices. The duration since a previous determination and/or the actual distance or angle measured during a previous determination are further parameters that may be exploited to influence the probability that a proximity awareness device becomes contention winner and gets the chance to determine the ranging schedule for the first coming ranging time window. Through an automated configuration algorithm that adapts the minimum time period and maximum time period for the waiting period of a device based on a combination of one or more of the above-mentioned parameters, the ranging probability hence may be trade-off against energy consumption by the device.

In embodiments of the proximity awareness device according to the present invention, as defined by claim 9, the probe signal further comprises a combination of one or more of following data:
- an identifier of the proximity awareness device;
- a type of the proximity awareness device;
- a profile of the proximity awareness device;
- an application wherein the proximity awareness device is used;
- duty cycle information for the proximity awareness device;
- the speed of the proximity awareness device;
- an activity level of the proximity awareness device;
- a noise level measured in the vicinity of said proximity awareness device;
- a user group associated with the proximity awareness device;
- presence of one or more certificates on the proximity awareness device.

In addition to the time information for the announcement signal, the probe signal in various embodiments of the invention may comprise a subset of one or more of the above-mentioned parameters. These parameters, once shared with the neighbouring devices, can be used by the neighbouring devices to update their proximity tables, and/or these parameters can be used by the algorithm(s) that dynamically adapt the duty cycle of the second transceiver and/or the minimum time period and/or maximum time period used for random selection of the random wait period.

In embodiments of the proximity awareness device according to the invention, as defined by claim 10, the announcement signal further comprises a combination of one or more of following data:
- an identifier of the proximity awareness device;
- a type of the proximity awareness device;
- a profile of the proximity awareness device;
- duty cycle information for the proximity awareness device;
- the speed of the proximity awareness device;
- an activity level of the proximity awareness device;
- a noise level measured in the vicinity of the proximity awareness device;
- a user group associated with the proximity awareness device;
- presence of one or more certificates on the proximity awareness device;
- a previous determination of distance between the proximity awareness device and the neighbouring devices;
- a relative distance increase or decrease between the proximity awareness device and one or more neighbouring devices;
- duration since a previous determination of distance between the proximity awareness device and the neighbouring devices;
- channel information;
- presence of obstacles between the proximity awareness device and one or more of the neighbouring devices.

Thus, in addition to the ranging schedule, the announcement signal in various embodiments of the invention may comprise a subset of one or more of the above-mentioned parameters. These parameters, once shared with the neighbouring devices via the probe signal, the announcement signal or both, can be used by the neighbouring devices to update their proximity tables. These parameters can also be used by the above-mentioned algorithm(s) that dynamically adapt the duty cycle of the second transceiver and/or dynamically adapt the minimum time period and/or the maximum time period used for random selection of the random wait period.

In embodiments of the proximity awareness device according to the invention, as defined by claim 11, the first duty cycle is configured per neighbouring device.

Thus, in addition to energy-efficient discovery of neighbouring devices via a duty-cycled low-power second transceiver, the energy efficiency of the proximity awareness device can be further improved through dynamic configuration of the duty cycle of the first, more power consuming transceiver used for ranging, i.e. for updating the distance and/or angle information. In configuring the duty cycle of the first transceiver, the proximity awareness device can take advantage of the ranging schedule. Herein, prioritized neighbouring devices are listed, as well as the timeslots in the ranging window that will be used to respectively range with the prioritized neighbouring devices. Certain timeslots in the ranging window may even be left unused if the amount of timeslots in a ranging window exceeds the amount of prioritized neighbouring devices that the proximity awareness device selects for ranging. The ranging schedule and as such the duty cycle of the first transceiver used for ranging can be dynamically configured in view of the individual ranging needs per neighbouring device.

In embodiments of the proximity awareness device according to the invention, as defined by claim 12, the first duty cycle is configured based on a combination of one or more of:
- the type of the proximity awareness device;
- the application wherein the proximity awareness device is used;
- the moving speed of the proximity awareness device;
- an activity level of the proximity awareness device;
- a previous determination of distance between the proximity awareness device and the neighbouring devices;
- a relative distance increase or decrease between the proximity awareness device and one or more neighbouring devices;
- duration since a previous determination of distance between the proximity awareness device and said neighbouring devices.

Indeed, a combination of one or more of the above-mentioned parameters can be exploited by the algorithm that prioritizes the detected neighbouring devices for ranging with the contention winning proximity awareness device, and in addition be used to dynamically configure the duty cycle of the first transceiver that will be used to execute the ranging protocol with the prioritized neighbouring devices in the respective assigned timeslots of the ranging window. Certain information like the type or application of the proximity awareness device may be readily available as it may be pre-programmed in the device. Other information like the moving speed or activity level of the proximity awareness device may be obtained from sensors like an accelerometer present in the device. Information concerning individual neighbouring devices like the most recent distance determined, the relative change in distance, the time lapsed since the most recent distance determination may be obtained from the proximity awareness table stored in the device and regularly updated based on the information exchanged in probe signals, announcement signals, or as a result of ranging.

In embodiments of the proximity awareness device according to the invention, as defined by claim 13, in order to implement the ranging protocol, the first transceiver is configured to perform within a ranging window the following steps:
- range as contention winning proximity awareness device with prioritized neighbouring devices in the respective timeslots assigned thereto,
   or
- range as a prioritized neighbouring device with a contention winning proximity awareness device or with another prioritized neighbouring device in a respective timeslot assigned thereto by the contention winning proximity awareness device; and
- operate in a low power mode in other timeslots of the ranging window,
   or
- operate as a non-contention winning proximity device and non-prioritized neighbouring device in a low power mode throughout said ranging window.

In the ranging phase, executed during the ranging time window, the duty cycle of the first transceiver used for ranging will be different per proximity awareness device, depending on its role. If the proximity awareness device is the contention winner, its first transceiver will be turned on during all timeslots of the ranging window wherein the contention winner elects to range with a prioritized neighbouring device. In timeslots where no ranging is performed, the contention winner can turn off the first transceiver or operate the first transceiver in a low power mode to save energy. If the proximity awareness device is a contention loser that is prioritized for ranging by the contention winner, the proximity awareness device will turn the first transceiver on for ranging with the contention winner or with another contention loser allowed to range within that timeslot by the contention winner, only during the specific timeslot selected by the contention winner for ranging by that device. That specific timeslot is identified in the ranging schedule received from the contention winner as part of the announcement signal. During all other timeslots of the ranging window, the device can switch off its second transceiver or operate its second transceiver in a low power mode to further save energy. Ranging between two contention losers may for instance be of interest if zone suppression is implemented wherein certain devices are not allowed to range and a zone suppressor can determine which devices are allowed or not allowed to range. If the proximity awareness device is a contention loser that is not prioritized for ranging by the contention winner, the device can switch off its second transceiver or operate its second transceiver in low power mode throughout the entire ranging window to further optimize its energy efficiency.

In embodiments of the proximity awareness device according to the invention, as defined by claim 14, in order to implement the ranging protocol, the first transceiver is configured to perform within a timeslot of the ranging window the following steps:
- transmit a first signal to a neighbouring device;
- receive a second signal transmitted by the neighbouring device upon receipt of the first signal;
- transmit a third signal to the neighbouring device upon receipt of the second signal; and
- determine a distance between the proximity awareness device and the neighbouring device from the round trip time between transmission of the first signal and receipt of the second signal.

In the timeslot assigned for ranging with a prioritized neighbour device, the contention winner in other words performs a traditional two-way ranging protocol. The round-trip time between transmission of a first signal to the prioritized neighbour device and receipt of a second signal from the prioritized neighbour device, the second signal being transmitted by the prioritized neighbour device upon receipt of the first signal, allows to determine the distance between the contention winner and the prioritized neighbour device. The so determined distance can be reported to the prioritized neighbour device such that both the contention winner and prioritized neighbour device can update their proximity table with the newly determined distance. Alternatively, the contention winner may transmit a third signal upon receipt of the second signal, enabling the prioritized neighbouring device to determine autonomously the distance from the round-trip time between transmission of the second signal and receipt of the third signal. The latter, so-called double-sided two-way ranging brings the advantage that no further information must be exchanged between the devices since each device determines the distance independently from the other one. A consequence is that the distance values stored in the respective proximity awareness tables of the devices will differ as a result of tolerances and changes in between transmission of the first signal and receipt of the third signal.

In embodiments of the proximity awareness device according to the invention, as defined by claim 15, the first signal and/or the second signal and/or the third signal comprise radio configuration settings comprising the length of a preamble, the modulation type, and the transmit power which is configured per neighbouring device based on the required accuracy, the link quality, the available energy, and the required measurable range of said distance.

Indeed, in order to flexibly adapt to different use cases, the length of the preamble, the modulation type and the transmit power of the ranging signals are adapted on the fly depending on the required accuracy and required measurable range for the distance measurements. Supplementary parameters that may be considered to adapt the radio configuration settings of the first transceiver used for ranging are the available energy or battery level of the device and environmental parameters like the link quality. Dynamic selection of the optimal first transceiver radio configurations depending on the use case, available energy and environment shall further contribute to optimizing the energy efficiency of the proximity awareness device while allowing a single proximity awareness device or single type of proximity awareness device to be used in a wide range of use cases.

In embodiments of the proximity awareness device according to the invention, as defined by claim 16, prioritizing discovered neighbouring devices and assigning to prioritized neighbouring devices respective timeslots in the ranging window is based on a combination of one or more of:
- an identifier of the proximity awareness device;
- a type of the proximity awareness device;
- a profile of the proximity awareness device;
- the speed of the proximity awareness device;
- an activity level of the proximity awareness device;
- a noise level measured in the vicinity of the proximity awareness device;
- a user group associated with the proximity awareness device ;
- presence of one or more certificates on the proximity awareness device ;
- a previous determination of distance between the proximity awareness device and the neighbouring devices;
- a relative distance increase or decrease between the proximity awareness device and one or more neighbouring devices;
- duration since a previous determination of distance between the proximity awareness device and the neighbouring devices;
- channel information;
- presence of obstacles between said proximity awareness device and one or more of the neighbouring devices;
- duty cycle information for the neighbouring devices.

A combination of one or more of the above-mentioned parameters can be exploited by the algorithm that prioritizes the detected neighbouring devices for ranging with the contention winning proximity awareness device, and determine which timeslots of the ranging window are assigned to these prioritized neighbouring devices. Certain information like the type or application of the proximity awareness device, the profile or user group where the proximity awareness device belongs to, and the presence of certificates may be readily available as it may be pre-programmed in the device. Other information like the moving speed or activity level of the proximity awareness device may be obtained from sensors like an accelerometer present in the device. Also channel information, presence of obstacles or a noise level can be measured or sensed by the device. Information concerning individual neighbouring devices like the most recent distance determined, the relative change in distance, the time lapsed since the most recent distance determination, the duty cycle of neighbouring devices may be obtained from the proximity awareness table stored in the device and regularly updated based on the information exchanged in probe signals, announcement signals, or as a result of ranging.

In embodiments of the proximity awareness device according to the present invention, as defined by claim 17, determining a ranging schedule further comprises assigning one or more timeslots in the ranging window for performing a localisation protocol with fixed anchor nodes or neighbouring nodes.

Indeed, in addition to assigning timeslots in the ranging time window to prioritized neighbouring devices, embodiments of the proximity awareness device according to the invention may also assign or reserve one or more timeslots in the ranging time window for determining or updating its location. The proximity awareness device thereto may perform a localization protocol with fixed anchor nodes or neighbouring nodes enabling to determine its own position. Flexibly switching between execution of a localisation protocol and execution of a ranging protocol may be scheduled in different scenario's.

In embodiments of the proximity awareness device according to the invention, as defined by claim 18, the first transceiver is an Ultra-Wideband transceiver, abbreviated UWB transceiver, and the second transceiver is a Bluetooth transceiver, abbreviated BLE transceiver.

Indeed, UWB is a highly accurate technology that enables to measure the distance between two devices with centimeter accuracy. Thanks to its high bandwidth (exceeding 500 MHz) and short communication pulses (below 1 nanosecond), UWB transceivers can very precisely determine a timestamp and consequently the time-of-flight of a signal. Current UWB transceivers are able to determine the distance between two devices with an accuracy of 20 centimetres and with a range up to 60 metres in industrial environments. Preferred embodiments of the present invention consequently may use an UWB transceiver as the first transceiver used to execute the ranging protocol. Bluetooth or BLE on the other hand is much more efficient than UWB in terms of energy consumption. Therefore, a BLE transceiver can be deployed as second transceiver, used to execute the discovery protocol in embodiments of the invention. The skilled person however will appreciate that the present invention is not restricted to a particular choice for the first transceiver or second transceiver.

In embodiments of the proximity awareness device according to the present invention, as defined by claim 19, the discovery protocol and/or said ranging protocol are compatible with Fine Ranging packet formatting, abbreviated FiRa packet formatting or with Apple nearby-interaction packet formatting.

The FiRa alliance defines packet formats to allow interoperability between UWB devices. A FiRa compatible packet structure enabling to exchange the contextual information contained in probe signals or announcement signals as described above, is preferred for reasons of compatibility with future FiRa products. Similarly, interoperability with the Apple nearby-interaction packet formatting is preferred.

To even further improve the energy efficiency of the proximity awareness device according to the present invention, the operations of the first and/or second transceiver therein may be suppressed in certain situations. The first and/or second transceiver may for instance be deactivated automatically during certain time periods of the day. The first and/or second transceiver may also be deactivated automatically when the proximity awareness device enters no-detection areas. Such no-detection zones may be identified through fixed beacons or nodes that can be sensed by the proximity awareness device. The first and/or second transceiver may also be deactivated automatically in situations where no alarms can be generated. Any of these techniques or a combination of these techniques will further help in reducing the energy consumption and extending the battery life of the proximity awareness device.

### Brief Description of the Drawings

Fig. 1 illustrates an environment wherein an embodiment of the proximity awareness device 101 according to the present invention is used to determine proximity awareness on neighbouring devices 102, 103, 104;
Fig. 2 is a functional block scheme of an embodiment of the proximity awareness device 200 according to the present invention;
Fig. 3 illustrates operation of a first embodiment of the proximity awareness device according to the present invention; and
Fig. 4 illustrates operation of a second embodiment of the proximity awareness device according to the present invention.

### Detailed Description of Embodiment(s)

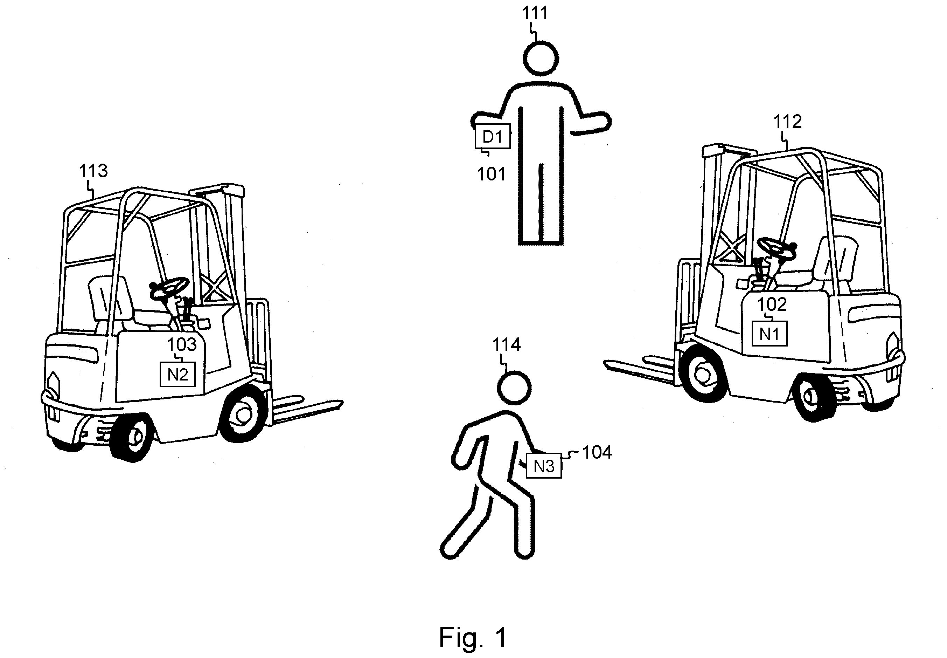

Fig. 1 shows a work environment wherein a first operator 111 is tagged with a first proximity awareness device, 101 or D1, that operates according to the present invention. In the work environment, a first forklift 112 is tagged with a second proximity awareness device, 102 or N1, and a second forklift is tagged with a third proximity awareness device, 103 or N2. Further, presence of a second operator 114 in the work environment is shown. The second operator 114 is wearing a fourth proximity awareness device, 104 or N3. The proximity awareness devices 101-104 are similar devices with similar technology, all operating according to the principles underlying the current invention. From the point of view of proximity awareness device D1, the other three proximity awareness devices N1-N3 represent neighbouring devices. The skilled person however will appreciate that the terms "device" and "neighbouring device" constitute relative terms that can be used interchangeably depending on the point of view taken. The proximity awareness devices 101-104 in the work environment of Fig. 1 permanently detect the presence of nearby devices through execution of a discovery protocol, and permanently measure the proximity, i.e. the distance and/or the angle to detected nearby devices, through execution of a ranging protocol. The results thereof are maintained in a proximity awareness memory and may be used to trigger alarms, issue warnings or notifications, avoid collisions, monitor social distance, etc.

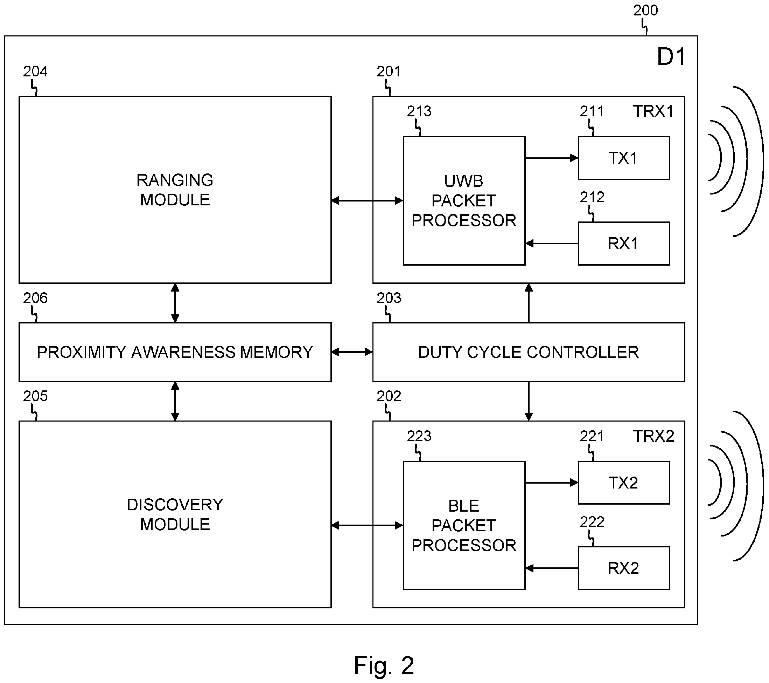

Fig. 2 shows the functional blocks of an embodiment of the proximity awareness device 200 according to the present invention. The proximity awareness device 200 for instance corresponds to the device D1 of Fig. 1 but, as explained above, may likewise correspond to the devices N1-N3 of Fig. 1. The proximity awareness device 200 comprises a first wireless transceiver, 201 or TRX1. In the embodiment of Fig. 2, this first transceiver 201 is assumed to be an UWB transceiver, comprising an UWB transmitter, 211 or TX1, an UWB receiver, 212 or RX1, and an UWB packet processor 213. The first transceiver 201 operates under control of a ranging module 204 to execute a ranging protocol. The proximity awareness device 200 further comprises a second wireless transceiver, 202 or TRX2. In the embodiment of Fig. 2, this second transceiver 202 is assumed to be a BLE transceiver, comprising a BLE transmitter, 221 or TX2, a BLE receiver, 222 or RX2, and a BLE packet processor 223. The second transceiver 202 operates under control of a discovery module 205 to execute a discovery protocol. Fig. 2 further shows the presence of a duty cycle controller 203 that controls the duty cycle of the first transceiver 201, i.e. the switching between full power and low power modes of the first transceiver 201, and that controls the duty cycle of the second transceiver 202, i.e. the switching between full power and low power modes of the second transceiver 202. The duty cycle controller this way optimizes the energy efficiency of the proximity awareness device 200 that is supposed to be a lightweight, wearable, battery-operated device. Fig. 2 further also shows the presence of a proximity awareness memory 206 wherein a table of detected neighbouring devices is maintained and the proximity information for these detected neighbouring devices is maintained based on information received from the ranging module 204 and/or discovery module 205. The proximity information stored in the proximity awareness memory 206 will also be used by the ranging module 204 and/or discovery module 205 when executing the ranging protocol and/or discovery protocol.

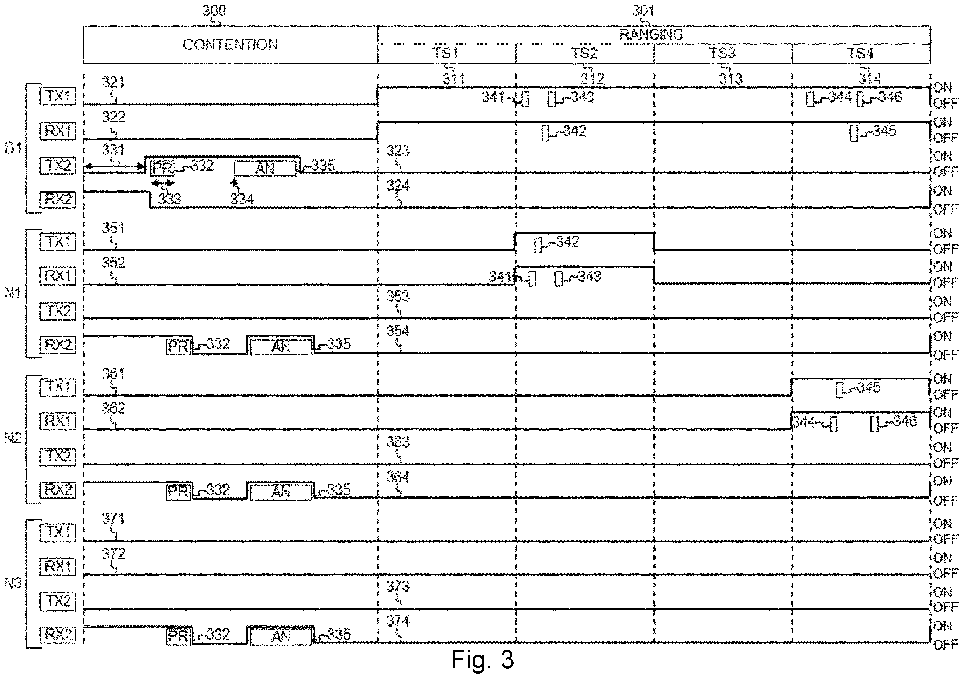

With reference to the work environment shown in Fig. 1, Fig. 3 illustrates the operation of the proximity awareness device D1 and neighbouring devices N1-N3 according to a first embodiment of the present invention. Fig. 3 thereto illustrates the operation of the first transmitter TX1 and first receiver RX1 as well as the operation of the second transmitter TX2 and second receiver RX2 in the different devices D1, N1-N3, during a contention time window 300 wherein the discovery procedure is executed and during a ranging time window 301 wherein the ranging protocol is executed. This ranging time window 301 is subdivided into 4 timeslots: TS1 or 311, TS2 or 312, TS3 or 313, and TS4 or 314. The contention time window 300 and ranging time window 301 both form part of a bigger timeframe, for instance a superframe, wherein, given the four timeslots 311-314, a proximity awareness device that becomes the contention winner during the contention time window 300 can exchange information with at most four other devices and update its proximity awareness on those four devices during the ranging time window 301. The skilled person will appreciate that the so called superframe may comprise more than just the contention time window 300 and the ranging time window 301 shown in Fig. 3, like for instance superframe overhead sections and/or a time lapse of predetermined length in between the contention window 300 and ranging window 301. In view of the current invention however, the contention time window 300 and ranging time window 301 represent the essential parts. Therefore, the following paragraphs will focus on the operation of the proximity awareness devices D1 and N1-N3 in the contention time window 300 and ranging time window 301. It is noticed that the devices D1 and N1-N3 are time-synchronized, i.e. their superframes and thus also their contention windows and ranging windows are time-aligned. The information contained in the probe signal or in the combined probe/announcement signal is sufficient to synchronize the devices. The announcement signal contains information on the timeslots and hence indirectly also timing information on the new superframe, enabling all devices to synchronize automatically with each other.

In the contention time window 300, the proximity awareness devices D1, N1-N3, execute a discovery procedure under control of their respective discovery modules 205. The discovery module 205 determines a random wait period for transmission of a probe signal and the second receiver RX2 is activated in order to start listening for a probe signal transmitted by another proximity awareness device. The first proximity awareness device whose random wait period is over without having received a probe signal from another proximity awareness device becomes the contention winner. In the example of Fig. 3, proximity awareness device D1 is assumed to become the contention winner as its random wait period 331 is over without having received a probe signal from any of its neighbouring devices N1-N3. The duty cycle controller 203 in D1 puts the second receiver RX2 asleep and wakes up the second transmitter TX2 such that a probe signal 332 can be transmitted by this low power BLE transmitter. The probe signal 332 has a predetermined length 333 and at least comprises timing information for an announcement signal 335 that will be transmitted by the low power BLE transmitter at a time 334 that corresponds to the timing information comprised in the probe signal 332. In addition thereto, the probe signal 332 may contain a subset of the following information:
- an identifier of the proximity awareness device D1;
- a type of the proximity awareness device D1;
- a profile of the proximity awareness device D1;
- an application wherein the proximity awareness device D1 is used;
- duty cycle information for the proximity awareness device D1;
- the speed of the proximity awareness device D1;
- an activity level of the proximity awareness device D1;
- a noise level measured in the vicinity of the proximity awareness device D1;
- a user group associated with the proximity awareness device D1;
- presence of one or more certificates on the proximity awareness device D1.

The neighbouring devices N1-N3 of proximity awareness device D1 still have their second transceiver TX2 on when the probe signal 332 transmitted by contention winner D1 is received. In these neighbouring devices, i.e. the contention losers, the duty cycle controller will put the second receiver RX2 asleep as soon as the probe signal 332 is received and the timing information on the announcement signal is extracted therefrom. Other information extracted from the probe signal 332 may be used by the discovery modules in the neighbouring devices N1-N3 to update the information stored in their respective proximity awareness memories. If for instance device D1 was yet unknown to one of the neighbouring devices N1-N3, it will be added to the list of detected nearby devices in the proximity awareness memory of that neighbouring device. This way, the contention winner D1 becomes discoverable by nearby contention losers. The contention losers N1-N3 further will not activate their second transmitter TX1 when their respective random wait period expires because they already received a probe signal 332 from another proximity awareness device, D1. The time information extracted from the received probe signal 332 is used by the duty cycle controller in the devices N1-N3 to determine the time whereon the second, low-power receiver RX2 is again activated to listen for the announcement signal 335. In between receipt of the probe signal 332 and receipt of the announcement signal 335, the neighbouring devices N1-N3 can keep their second receivers RX2 in sleep mode or low power state to reduce the energy consumption.

The contention winner D1 uses the time in between transmission of the probe signal 332 and transmission of the announcement signal 335 to perform a ranging scheduling algorithm that determines which of its nearby devices are prioritized for ranging and which timeslots in the ranging time window 301 are assigned to these prioritized nearby devices. The algorithm may prioritize the nearby devices for ranging based on a subset of the following information:
- an identifier of the proximity awareness device D1;
- a type of the proximity awareness device D1;
- a profile of the proximity awareness device D1;
- the speed of the proximity awareness device D1;
- an activity level of the proximity awareness device D1;
- a noise level measured in the vicinity of the proximity awareness device D1;
- a user group associated with the proximity awareness device D1;
- presence of one or more certificates on the proximity awareness device D1;
- a previous determination of distance between the proximity awareness device D1 and the neighbouring devices N1, N2, N3;
- a relative distance increase or decrease between the proximity awareness device D1 and one or more neighbouring devices N1, N2, N3;
- duration since a previous determination of distance between the proximity awareness device D1 and the neighbouring devices N1, N2, N3;
- channel information;
- presence of obstacles between the proximity awareness device D1 and one or more of the neighbouring devices N1, N2, N3;
- duty cycle information for the neighbouring devices N1, N2, N3.

The result of this algorithm is a ranging scheduling table. In the example of Fig. 3, the contention winner D1 for instance prioritizes nearby device N1 for ranging in timeslot TS2 and prioritizes nearby device N2 for ranging in timeslot TS4. Other known nearby devices, like for instance N3, are not prioritized, and the timeslots TS1 and TS3 are left unused. The ranging scheduling table that specifies which nearby devices are prioritized for ranging and which respective timeslots are assigned thereto, is included in the announcement signal 335 that is transmitted by the contention winner D1 at the time 334 specified in the probe signal 332. In the just given example, the announcement signal 335 thus at least contains the following information: N1, TS2, N2, TS4. The announcement signal 335 may further comprise a subset of the following information:
- an identifier of the proximity awareness device D1;
- a type of the proximity awareness device D1;
- a profile of the proximity awareness device D1;
- duty cycle information for the proximity awareness device D1;
- the speed of the proximity awareness device D1;
- an activity level of the proximity awareness device D1;
- a noise level measured in the vicinity of the proximity awareness device D1;
- a user group associated with the proximity awareness device D1;
- presence of one or more certificates on the proximity awareness device D1;
- a previous determination of distance between the proximity awareness device D1 and the neighbouring devices N1, N2, N3;
- a relative distance increase or decrease between the proximity awareness device D1 and one or more neighbouring devices N1, N2, N3;
- duration since a previous determination of distance between the proximity awareness device D1 and the neighbouring devices N1, N2, N3;
- channel information;
- presence of obstacles between the proximity awareness device D1 and one or more of said neighbouring devices N1, N2, N3.

After transmission of the announcement signal 335, the duty cycle controller of device D1 turns the second transmitter TX2 in low power mode to reduce the energy consumption. Likewise, the duty cycle controllers of the neighbouring devices N1-N3 turn their second receivers RX2 on at the time 334 extracted from the probe signal 332 to receive announcement signal 335 and extract therefrom the ranging schedule, and turn their second receiver RX2 into sleep mode after receipt of the announcement signal 335 to minimize the energy consumption required for exchanging the ranging schedule. The information contained in the announcement signal 335 in addition to the ranging schedule may be used by the discovery modules in the neighbouring devices N1-N3 to update the information stored in their respective proximity awareness memories.

Throughout the contention window 300, the first transmitters TX1 and first receivers RX1 of all devices D1, N1-N3, are kept in low power state.

In the ranging time window 301, the second transceivers of all devices D1, N1-N3, may be switched off (or operated in low power state). Although the second transceivers are low-power transceivers, the energy efficiency of the proximity awareness devices D1, N1-N3 is further optimized this way. The so-obtained duty cycles for the second transmitters TX2 and second receivers RX2 of the devices D1, N1, N2 and N3 are respectively denoted 323, 324, 353, 354, 363, 364, 373 and 374. In practical implementations, the second transceiver of the contention winner will regularly awake in the ranging time window to detect new nearby devices that are not yet aware of the current superframe and desire to send a probe signal. The contention winner shall then periodically send a signal throughout the ranging window to indicate to new nearby devices when the next contention period will start. Alternatively or supplementary, the contention period for newly activated devices may be configured to have a minimum duration equal to or exceeding the duration of a superframe. Alternatively or supplementary, the contention winner may indicate to all nearby devices that the minimum duration of the contention period equals the duration of the entire superframe to force resynchronization between all devices. The above measures may be implemented separately or combinedly in order to avoid that newly activated devices that are not aware of the current superframe start contending during the ranging window of the existing superframe, at a time all other devices have their second transceiver switched off. Such newly activated device would become the contention winner in a new superframe, as a result of which subgroups of devices could be created, the devices within a subgroup being synchronised but different subgroups not being synchronised.

The contention winner D1 switches on its first transceiver TX1/RX1 throughout the ranging time window 301. The contention losers N1-N3 interpret the ranging schedule received as part of the announcement signal 335. Each contention loser determines if it is prioritised for ranging by the contention winner and if so, which timeslot in the ranging time window 301 is assigned to it for ranging with the contention winner. This information is used by the duty cycle controllers in the contention losing devices N1-N3 in order to activate the first transceivers thereof only in the respective timeslots assigned for ranging. In the example of Fig. 3, the duty cycle controller of the first neighbouring device N1 activates the first transmitter TX1 and first receiver RX1 of device N1 only in the second timeslot TS2 of ranging time window 301. In that timeslot, the first receiver RX1 of device N1 will listen for a first signal 341 transmitted by the first transmitter of contention winner D1. Upon receipt of the first signal 341, device N1 will respond by transmitting a second signal 342 via its first transmitter. The time lapsed between transmitting the first signal 341 and receiving the second signal 342, i.e. the round-trip time between device D1 and device N1, allows the contention winner D1 to determine the time-of-flight and consequently also the distance between devices D1 and N1. Upon receipt of the second signal 342, the contention winner shall transmit a third signal 343 via its first transmitter TX1. The time lapsed between transmitting the second signal 342 and receiving the third signal 343, i.e. the round-trip time between device N1 and device D1, allows prioritized contention loser N1 to determine the time-of-flight and consequently also the distance between devices N1 and D1 autonomously, without requiring device D1 to share further information. During the timeslots TS1, TS3 and TS4, device N1 can turn its first, power-consuming UWB transceiver TX1/RX1 into sleep mode or low power mode. In a similar way, the duty cycle controller of the second neighbouring device N2 activates the first transmitter TX1 and first receiver RX1 of device N2 only in the fourth timeslot TS4 of ranging time window 301. In that timeslot, the first receiver RX1 of device N2 will listen for a first signal 344 transmitted by the first transmitter of contention winner D1. Upon receipt of the first signal 344, device N2 will respond by transmitting a second signal 345 using its first transmitter. The time lapsed between transmitting the first signal 344 and receiving the second signal 345, i.e. the round-trip time between device D1 and device N2, allows the contention winner D1 to determine the time-of-flight and consequently also the distance between devices D1 and N2. Upon receipt of the second signal 345, the contention winner D1 shall transmit a third signal 346 via its first transmitter TX1. The time lapsed between transmitting the second signal 345 and receiving the third signal 346, i.e. the round-trip time between device N2 and device D1, allows prioritized contention loser N2 to determine the time-of-flight and consequently also the distance between devices N2 and D1 autonomously, without requiring device D1 to share further information. During the timeslots TS1, TS2 and TS3, device N2 can turn its first, power-consuming UWB transceiver TX1/RX1 into sleep mode or low power mode. The third neighbouring device N3 that was not prioritized for ranging by the contention winner D1 at last can keep its first, power-consuming UWB transceiver TX1/RX1 into sleep mode or low power mode throughout the entire ranging window 301. The so-obtained duty cycles for the first transmitters TX1 and first receivers RX1 of the devices D1, N1, N2 and N3 are respectively denoted 321, 322, 351, 352, 361, 362, 371 and 372.

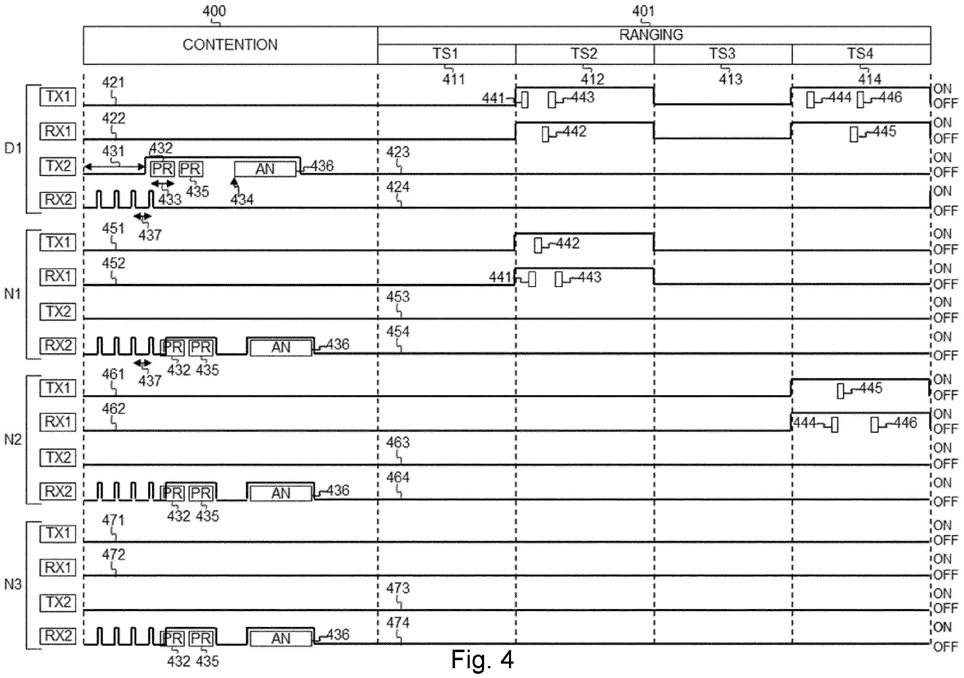

With reference to the work environment shown in Fig. 1, Fig. 4 illustrates the operation of the proximity awareness device D1 and neighbouring devices N1-N3 according to a second embodiment of the present invention. Fig. 4 thereto illustrates the operation of the first transmitter TX1 and first receiver RX1 as well as the operation of the second transmitter TX2 and second receiver RX2 in the different devices D1, N1-N3, during a contention time window 400 wherein the discovery procedure is executed and during a ranging time window 401 wherein the ranging protocol is executed. This ranging time window 401 is subdivided into 4 timeslots: TS1 or 411, TS2 or 412, TS3 or 413, and TS4 or 414. The contention time window 400 and ranging time window 401 both form part of a bigger timeframe, for instance a superframe, wherein, given the four timeslots 411-414, a proximity awareness device that becomes the contention winner during the contention time window 400 can exchange information with at most four other devices and update its proximity awareness on those four devices during the ranging time window 401. The skilled person will appreciate that the so called superframe may comprise more than just the contention time window 400 and the ranging time window 401 shown in Fig. 4, like for instance superframe overhead sections and/or a time lapse of predetermined length in between the contention window 400 and ranging window 401. In view of the current invention however, the contention time window 400 and ranging time window 401 represent the essential parts. Therefore, the following paragraphs will focus on the operation of the proximity awareness devices D1 and N1-N3 in the contention time window 400 and ranging time window 401. It is noticed that the devices D1 and N1-N3 are time-synchronized, i.e. their superframes and thus also their contention windows and ranging windows are time-aligned. The information contained in the probe signal or in the combined probe/announcement signal is sufficient to synchronize the devices. The announcement signal contains information on the timeslots and hence indirectly also timing information on the new superframe, enabling all devices to synchronize automatically with each other. Compared to the first embodiment illustrated by Fig. 3, this second embodiment illustrated by Fig. 4 further improves the energy efficiency, in particular the energy efficiency of the second transceivers during the contention time window 400.

In the contention time window 400, the proximity awareness devices D1, N1-N3, execute a discovery procedure under control of their respective discovery modules. The discovery module determines a random wait period for transmission of a probe signal 432. The probe signal 432 shall be transmitted multiple times, for instance a second time 435. The second receiver RX2 is not activated to start listening permanently for a probe signal transmitted by another proximity awareness device, but only senses at regular instants if energy is received that exceeds a certain threshold. The time 437 between two sensing instants preferably is shorter than the length or duration 433 of the probe signal 432. The first proximity awareness device whose random wait period is over without having received a probe signal from another proximity awareness device becomes the contention winner. In the example of Fig. 4, proximity awareness device D1 is assumed to become the contention winner as its random wait period 431 is over without having received a probe signal from any of its neighbouring devices N1-N3. The duty cycle controller in D1 puts the second receiver RX2 asleep and wakes up the second transmitter TX2 such that the probe signal 432 and a copy 435 of the probe signal 432 are transmitted by this low power BLE transmitter. The probe signal 432 and its copy 435 have a predetermined length 433 and at least comprise timing information for an announcement signal 436 that will be transmitted by the low power BLE transmitter at a time 434 that corresponds to the timing information comprised in the probe signal 432 and its copy 435. In addition thereto, the probe signal 432 and its copy 435 may contain a subset of the following information:
- an identifier of the proximity awareness device D1;
- a type of the proximity awareness device D1;
- a profile of the proximity awareness device D1;
- an application wherein the proximity awareness device D1 is used;
- duty cycle information for the proximity awareness device D1;
- the speed of the proximity awareness device D1;
- an activity level of the proximity awareness device D1;
- a noise level measured in the vicinity of the proximity awareness device D1;
- a user group associated with the proximity awareness device D1;
- presence of one or more certificates on the proximity awareness device D1.

The neighbouring devices N1-N3 of proximity awareness device D1 at a point in time sense that the received energy exceeds a predetermined threshold. When the distance 437 between sensing instants is shorter than the duration 433 of the probe signal 432, the received energy exceeding the predetermined threshold must result from the transmission of the first probe signal 432 by the contention winner. The duty cycle controllers in the devices N1-N3 sensing this received energy now control their second receivers to operate in full power mode until the complete second transmission of the probe signal 435 is received, and the duty cycle controller will put the second receiver RX2 asleep as soon as the second transmission of the probe signal 435 is received and the timing information on the announcement signal is extracted therefrom. The skilled person will appreciate that in variant embodiments, multiple copies of the probe signal may be transmitted, the duration of the probe signal, the pace at which these copies are transmitted and the frequency at which the second receivers are sensing for received energy levels exceeding a certain threshold being configured such that the second receivers of contention losers at least receive one full copy of the probe signal and be able to extract the time information for the announcement signal therefrom. Other information extracted from the probe signal 432 or 435 may be used by the discovery modules in the neighbouring devices N1-N3 to update the information stored in their respective proximity awareness memories. If for instance device D1 was yet unknown to one of the neighbouring devices N1-N3, it will be added to the list of detected nearby devices in the proximity awareness memory of that neighbouring device. This way, the contention winner D1 becomes discoverable by nearby contention losers. The contention losers N1-N3 further will not activate their second transmitter TX1 when their respective random wait period expires because they already received a probe signal 432 or 435 from another proximity awareness device, D1. The time information extracted from the received probe signal 435 is used by the duty cycle controller in the devices N1-N3 to determine the time whereon the second, low-power receiver RX2 is again activated to listen for the announcement signal 436. In between receipt of the complete probe signal 435 and receipt of the announcement signal 436, the neighbouring devices N1-N3 can keep their second receivers RX2 in sleep mode or low power state to reduce the energy consumption.

The contention winner D1 uses the time in between transmission of the first probe signal 432 and transmission of the announcement signal 436 to perform a ranging scheduling algorithm that determines which of its nearby devices are prioritized for ranging and which timeslots in the ranging time window 401 are assigned to these prioritized nearby devices. The algorithm may prioritize the nearby devices for ranging based on a subset of the following information:
- an identifier of the proximity awareness device D1;
- a type of the proximity awareness device D1;
- a profile of the proximity awareness device D1;
- the speed of the proximity awareness device D1;
- an activity level of the proximity awareness device D1;
- a noise level measured in the vicinity of the proximity awareness device D1;
- a user group associated with the proximity awareness device D1;
- presence of one or more certificates on the proximity awareness device D1;
- a previous determination of distance between the proximity awareness device D1 and the neighbouring devices N1, N2, N3;
- a relative distance increase or decrease between the proximity awareness device D1 and one or more neighbouring devices N1, N2, N3;
- duration since a previous determination of distance between the proximity awareness device D1 and the neighbouring devices N1, N2, N3;
- channel information;
- presence of obstacles between the proximity awareness device D1 and one or more of the neighbouring devices N1, N2, N3;
- duty cycle information for the neighbouring devices N1, N2, N3.

The result of this algorithm is a ranging scheduling table. In the example of Fig. 4, the contention winner D1 for instance prioritizes nearby device N1 for ranging in timeslot TS2 and prioritizes nearby device N2 for ranging in timeslot TS4. Other known nearby devices, like for instance N3, are not prioritized, and the timeslots TS1 and TS3 are left unused. The ranging scheduling table that specifies which nearby devices are prioritized for ranging and which respective timeslots are assigned thereto, is included in the announcement signal 436 that is transmitted by the contention winner D1 at the time 434 specified in all copies of the probe signal 432, 435. In the just given example, the announcement signal 436 thus at least contains the following information: N1, TS2, N2, TS4. The announcement signal 436 may further comprise a subset of the following information:
- an identifier of the proximity awareness device D1;
- a type of the proximity awareness device D1;
- a profile of the proximity awareness device D1;
- duty cycle information for the proximity awareness device D1;
- the speed of the proximity awareness device D1;
- an activity level of the proximity awareness device D1;
- a noise level measured in the vicinity of the proximity awareness device D1;
- a user group associated with the proximity awareness device D1;
- presence of one or more certificates on the proximity awareness device D1;
- a previous determination of distance between the proximity awareness device D1 and the neighbouring devices N1, N2, N3;
- a relative distance increase or decrease between the proximity awareness device D1 and one or more neighbouring devices N1, N2, N3;
- duration since a previous determination of distance between the proximity awareness device D1 and the neighbouring devices N1, N2, N3;
- channel information;
- presence of obstacles between the proximity awareness device D1 and one or more of said neighbouring devices N1, N2, N3.

After transmission of the announcement signal 436, the duty cycle controller of device D1 turns the second transmitter TX2 in low power mode to reduce the energy consumption. Likewise, the duty cycle controllers of the neighbouring devices N1-N3 turn their second receivers RX2 on at the time 434 extracted from the probe signal 432, 435 to receive announcement signal 436 and extract therefrom the ranging schedule, and turn their second receiver RX2 into sleep mode after receipt of the announcement signal 436 to minimize the energy consumption required for exchanging the ranging schedule. The information contained in the announcement signal 436 in addition to the ranging schedule may be used by the discovery modules in the neighbouring devices N1-N3 to update the information stored in their respective proximity awareness memories.

Throughout the contention window 400, the first transmitters TX1 and first receivers RX1 of all devices D1, N1-N3, are kept in low power state.

In the ranging time window 401, the second transceivers of all devices D1, N1-N3, are switched off (or operated in low power state). Although the second transceivers are low-power transceivers, the energy efficiency of the proximity awareness devices D1, N1-N3 is further optimized this way. The so-obtained duty cycles for the second transmitters TX2 and second receivers RX2 of the devices D1, N1, N2 and N3 are respectively denoted 423, 424, 453, 454, 463, 464, 473 and 474 in Fig. 4.

The contention winner D1 switches on its first transceiver TX1/RX1 in the timeslots selected for ranging with a prioritized nearby device, i.e. in the second timeslot TS2 of ranging time window 401 and in the fourth timeslot TS4 of ranging time window 401 in the example of Fig. 4. The contention losers N1-N3 interpret the ranging schedule received as part of the announcement signal 436. Each contention loser determines if it is prioritised for ranging by the contention winner and if so, which timeslot in the ranging time window 401 is assigned to it for ranging with the contention winner. This information is used by the duty cycle controllers in the contention losing devices N1-N3 in order to activate the first transceivers thereof only in the respective timeslots assigned for ranging. In the example of Fig. 4, the duty cycle controller of the first neighbouring device N1 activates the first transmitter TX1 and first receiver RX1 of device N1 only in the second timeslot TS2 of ranging time window 401. In that timeslot, the first receiver RX1 of device N1 will listen for a first signal 441 transmitted by the first transmitter of contention winner D1. Upon receipt of the first signal 441, device N1 will respond by transmitting a second signal 442 via its first transmitter. The time lapsed between transmitting the first signal 441 and receiving the second signal 442, i.e. the round-trip time between device D1 and device N1, allows the contention winner D1 to determine the time-of-flight and consequently also the distance between devices D1 and N1. Upon receipt of the second signal 442, the contention winner shall transmit a third signal 443 via its first transmitter TX1. The time lapsed between transmitting the second signal 442 and receiving the third signal 443, i.e. the round-trip time between device N1 and device D1, allows prioritized contention loser N1 to determine the time-of-flight and consequently also the distance between devices N1 and D1 autonomously, without requiring device D1 to share further information. During the timeslots TS1, TS3 and TS4, device N1 can turn its first, power-consuming UWB transceiver TX1/RX1 into sleep mode or low power mode. In a similar way, the duty cycle controller of the second neighbouring device N2 activates the first transmitter TX1 and first receiver RX1 of device N2 only in the fourth timeslot TS4 of ranging time window 401. In that timeslot, the first receiver RX1 of device N2 will listen for a first signal 444 transmitted by the first transmitter of contention winner D1. Upon receipt of the first signal 444, device N2 will respond by transmitting a second signal 445 using its first transmitter. The time lapsed between transmitting the first signal 444 and receiving the second signal 445, i.e. the round-trip time between device D1 and device N2, allows the contention winner D1 to determine the time-of-flight and consequently also the distance between devices D1 and N2. Upon receipt of the second signal 445, the contention winner D1 shall transmit a third signal 446 via its first transmitter TX1. The time lapsed between transmitting the second signal 445 and receiving the third signal 446, i.e. the round-trip time between device N2 and device D1, allows prioritized contention loser N2 to determine the time-of-flight and consequently also the distance between devices N2 and D1 autonomously, without requiring device D1 to share further information. During the timeslots TS1, TS2 and TS3, device N2 can turn its first, power-consuming UWB transceiver TX1/RX1 into sleep mode or low power mode. The third neighbouring device N3 that was not prioritized for ranging by the contention winner D1 at last can keep its first, power-consuming UWB transceiver TX1/RX1 into sleep mode or low power mode throughout the entire ranging window 401. The so-obtained duty cycles for the first transmitters TX1 and first receivers RX1 of the devices D1, N1, N2 and N3 are respectively denoted 421, 422, 451, 452, 461, 462, 471 and 472.

Compared with the first embodiment illustrated by Fig. 3, the second embodiment brings the additional advantage of further optimizing the energy efficiency in the contention phase or discovery phase through low power sensing for received energy and powering the second receiver only when the received energy level exceeds a certain threshold instead of permanent full-power listening from the start of the contention window till receipt of the probe signal. The second embodiment also brings the additional advantage of further optimizing the energy efficiency in the ranging phase by turning the power-consuming first transceiver TX1/RX1 of the contention winner into sleep mode during timeslots not selected for ranging with a prioritized nearby device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A proximity awareness device (101; 200) adapted to establish proximity awareness on neighbouring devices (102, 103, 104) similar to said proximity awareness device (101; 200), said proximity awareness device (101, 200) comprising:
- a first transceiver (201) configured to implement a ranging protocol to determine a distance and/or angle between said proximity awareness device (101; 200) and at least one of said neighbouring devices (102, 103, 104); and
- a second transceiver (202) configured to implement a discovery protocol to discover presence of said neighbouring devices (102, 103, 104), said second transceiver (202) consuming less power than said first transceiver (201),
- wherein said first transceiver (201) is controlled to operate according to a first duty cycle (321, 322; 421, 422); and
- wherein said second transceiver (202) is controlled to operate according to a second duty cycle (323, 324; 423, 424),
and wherein in order to implement said discovery protocol, said second transceiver (202) is configured to perform within a contention window (300; 400) the following steps:
- transmit after a random wait period (331; 431) within said contention window (300; 400) a probe signal (332; 432) comprising at least timing information for an announcement signal (335; 436) or for a ranging window;
- determine a ranging schedule by prioritizing discovered neighbouring devices (N1, N2, N3) and assigning to prioritized neighbouring devices (N1, N2) respective timeslots (TS2, TS4) in a ranging window (301; 401); and
- transmit said announcement signal (335; 436) at a time corresponding to said timing information or together with said probe signal, said announcement message (335; 436) comprising at least said ranging schedule,
or alternatively:
- receive a probe signal from a neighbouring device (N1, N2, N3) prior to said random wait period (331; 431);
- extract from said probe signal timing information for an announcement signal to be received from said neighbouring device (N1, N2, N3) or for a ranging window;
- receive said announcement signal from said neighbouring device at a time corresponding to said timing information or together with said probe signal; and
- extract from said announcement signal a ranging schedule for a plurality of prioritized neighbouring devices (N1,N2) determined by said neighbouring device (N1, N2, N3) by prioritizing discovered neighbouring devices (N1,N2,N3) and assigning to prioritized neighbouring devices (N1,N2) respective timeslots (TS2, TS4) in a ranging window (301;401).

2. A proximity awareness device (101; 200) according to claim 1, wherein said second duty cycle (323, 324; 423, 424) is configured at least based on a minimum discovery rate derived from application requirements of an application wherein said proximity awareness device (101; 200) is used.

3. A proximity awareness device (101; 200) according to claim 1 or claim 2, wherein said second duty cycle (323, 324; 423, 424) is configured based on a combination of one or more of:
- the type of said proximity awareness device (101; 200);
- the application wherein said proximity awareness device (101; 200) is used;
- the moving speed of said proximity awareness device (101; 200);
- an activity level of said proximity awareness device (101; 200);
- a previous determination of distance between said proximity awareness device (101; 200) and said neighbouring devices (N1, N2, N3);
- a relative distance increase or decrease between said proximity awareness device (101; 200) and one or more neighbouring devices (N1, N2, N3);
- duration since a previous determination of distance between said proximity awareness device (101; 200) and said neighbouring devices (N1, N2, N3).

4. A proximity awareness device (101; 200) according to claim 1, wherein said second transceiver (202) is configured to operate in a low power mode between transmission of said probe signal (332) and transmission of said announcement signal (335).

5. A proximity awareness device (101; 200) according to one of the preceding claims, wherein said second transceiver (202) is dynamically adapted, based on said timing information extracted from said probe signal, to operate in a low power mode between receiving said probe signal and receiving said announcement signal.

6. A proximity awareness device (101; 200) according to one of the preceding claims, wherein in order to implement said discovery protocol, said second transceiver (202) is further configured to:
- transmit said probe signal (435) multiple times within said contention interval (400) depending on the duty cycle of the receiver in the second transceiver of said neighbouring devices (102, 103, 104), said probe signal having a predetermined length (433) in time.

7. A proximity awareness device (101; 200) according to claim 6, wherein said second transceiver (202) is configured to:
- listen at listening instants, the time (437) in between successive listening instants not exceeding said predetermined length in time (433) of said probe signal;
- operate in a low power mode in between listening instants as long as the energy received at a listening instant stays below a predetermined energy threshold and as long as no announcement signal is expected;
- operate in full power mode to receive a further transmission of said probe signal (435) when the energy received at a listening instant exceeds said predetermined energy threshold.

8. A proximity awareness device (101; 200) according to one of the preceding claims, wherein said random wait period (331; 431) is determined randomly between a minimum time period and maximum time period, said minimum time period and said maximum time period being configured or being dynamically adapted based on a combination of one or more of:
- the type of said proximity awareness device (101; 200);
- the application wherein said proximity awareness device (101; 200) is used;
- the moving speed of said proximity awareness device (101; 200);
- an activity level of said proximity awareness device (101; 200);
- a previous determination of distance between said proximity awareness device (101; 200) and said neighbouring devices (N1, N2, N3);
- a relative distance increase or decrease between said proximity awareness device (101; 200) and one or more neighbouring devices (N1, N2, N3);
- duration since a previous determination of distance between said proximity awareness device (101; 200) and said neighbouring devices (N1, N2, N3).

9. A proximity awareness device according to one of the preceding claims, wherein when transmitting the probe signal said probe signal (332; 432; 435) further comprises a combination of one or more of following data:
- an identifier of said proximity awareness device (101; 200);
- a type of said proximity awareness device (101; 200);
- a profile of said proximity awareness device (101; 200);
- an application wherein said proximity awareness device (101; 200) is used;
- duty cycle information for said proximity awareness device (101; 200);
- the speed of said proximity awareness device (101; 200);
- an activity level of said proximity awareness device (101; 200);
- a noise level measured in the vicinity of said proximity awareness device (101; 200);
- a user group associated with said proximity awareness device (101; 200);
- presence of one or more certificates on said proximity awareness device (101; 200).

10. A proximity awareness device (101; 200) according to one of the preceding claims, wherein when transmitting the announcement signal said announcement signal (335; 436) further comprises a combination of one or more of following data:
- an identifier of said proximity awareness device (101; 200);
- a type of said proximity awareness device (101; 200);
- a profile of said proximity awareness device (101; 200);
- duty cycle information for said proximity awareness device (101; 200);
- the speed of said proximity awareness device (101; 200);
- an activity level of said proximity awareness device (101; 200);
- a noise level measured in the vicinity of said proximity awareness device (101; 200);
- a user group associated with said proximity awareness device (101; 200);
- presence of one or more certificates on said proximity awareness device (101; 200);
- a previous determination of distance between said proximity awareness device (101; 200) and said neighbouring devices (N1, N2, N3);
- a relative distance increase or decrease between said proximity awareness device (101; 200) and one or more neighbouring devices (N1, N2, N3);
- duration since a previous determination of distance between said proximity awareness device (101; 200) and said neighbouring devices (N1, N2, N3);
- channel information;
- presence of obstacles between said proximity awareness device (101; 200) and one or more of said neighbouring devices (N1, N2, N3).

11. A proximity awareness device (101; 200) according to claim 1, wherein said first duty cycle (321, 322; 421, 422) is configured per neighbouring device.

12. A proximity awareness device (101; 200) according to claim 11, wherein said first duty cycle (321, 322; 421, 422) is configured based on a combination of one or more of:
- the type of said proximity awareness device (101; 200);
- the application wherein said proximity awareness device (101; 200) is used;
- the moving speed of said proximity awareness device (101; 200);
- an activity level of said proximity awareness device (101; 200);
- a previous determination of distance between said proximity awareness device (101; 200) and said neighbouring devices (N1, N2, N3);
- a relative distance increase or decrease between said proximity awareness device (101; 200) and one or more neighbouring devices (N1, N2, N3);
- duration since a previous determination of distance between said proximity awareness device (101; 200) and said neighbouring devices (N1, N2, N3).

13. A proximity awareness device (101; 200) according to claim 11 or 12, wherein in order to implement said ranging protocol, said first transceiver (201) is configured to perform within a ranging window (301; 401) the following steps:
- range as contention winning proximity awareness device (D1) with prioritized neighbouring devices (N1, N2) in said respective timeslots (TS2, TS4) assigned thereto,
or
- range as a prioritized neighbouring device (N1) with a contention winning proximity awareness device (D1) or with another prioritized neighbouring device in a respective timeslot (TS2) assigned thereto by said contention winning proximity awareness device (D1); and
- operate in a low power mode in other timeslots (TS1, TS3, TS4) of said ranging window (301; 401),
or
- operate as a non-contention winning proximity device and non-prioritized neighbouring device (N3) in a low power mode throughout said ranging window (301; 401).

14. A proximity awareness device (101; 200) according to claim 11, 12 or 13, wherein in order to implement said ranging protocol, said first transceiver (201) is configured to perform within a timeslot (TS2) of said ranging window (301; 401) the following steps:
- transmit a first signal (341) to a neighbouring device (N1);
- receive a second signal (342) transmitted by said neighbouring device (N1) upon receipt of said first signal (341);
- transmit a third signal (343) to said neighbouring device (N1) upon receipt of said second signal (342); and
- determine a distance between said proximity awareness device (101; 200) and said neighbouring device (N1) from the round trip time between transmission of said first signal (341) and receipt of said second signal (342).

15. A proximity awareness device (101; 200) according to claim 14, wherein said first signal (341) and/or said second signal (342) and/or said third signal (343) comprise radio configuration settings comprising the length of a preamble, the modulation type, and the transmit power which is configured per neighbouring device based on the required accuracy, the link quality, the available energy, and the required measurable range of said distance.

16. A proximity awareness device (101; 200) according to claim 1, wherein prioritizing discovered neighbouring devices and assigning to prioritized neighbouring devices respective timeslots in said ranging window is based on a combination of one or more of:
- an identifier of said proximity awareness device (101; 200);
- a type of said proximity awareness device (101; 200);
- a profile of said proximity awareness device (101; 200);
- the speed of said proximity awareness device (101; 200);
- an activity level of said proximity awareness device (101; 200);
- a noise level measured in the vicinity of said proximity awareness device (101; 200);
- a user group associated with said proximity awareness device (101; 200);
- presence of one or more certificates on said proximity awareness device (101; 200);
- a previous determination of distance between said proximity awareness device (101; 200) and said neighbouring devices (N1, N2, N3);
- a relative distance increase or decrease between said proximity awareness device (101; 200) and one or more neighbouring devices (N1, N2, N3);
- duration since a previous determination of distance between said proximity awareness device (101; 200) and said neighbouring devices (N1, N2, N3);
- channel information;
- presence of obstacles between said proximity awareness device (101; 200) and one or more of said neighbouring devices (N1, N2, N3);
- duty cycle information for said neighbouring devices (N1, N2, N3).

17. A proximity awareness device (101; 200) according to claim 1, wherein determining a ranging schedule further comprises assigning one or more timeslots in said ranging window (301; 401) for performing a localisation protocol with fixed anchor nodes or neighbouring nodes.

18. A proximity awareness device (101; 200) according to one of the preceding claims, wherein said first transceiver (201) is an Ultra-Wideband transceiver, abbreviated UWB transceiver, and said second transceiver (202) is a Bluetooth transceiver, abbreviated BLE transceiver.

19. A proximity awareness device (101; 200) according to one of the preceding claims, wherein said discovery protocol and/or said ranging protocol are compatible with Fine Ranging packet formatting, abbreviated FiRa packet formatting.

## Patentansprüche

1. Näherungsbewusstseinsvorrichtung (101; 200), die dazu angepasst ist, ein Näherungsbewusstsein bezüglich benachbarten Vorrichtungen (102, 103, 104) zu schaffen, die der Näherungsbewusstseinsvorrichtung (101; 200) ähnlich sind, wobei die Näherungsbewusstseinsvorrichtung (101, 200) Folgendes umfasst:
- einen ersten Sendeempfänger (201), der dazu konfiguriert ist, ein Reichweitenmessprotokoll zu implementieren, um eine Entfernung und/oder einen Winkel zwischen der Näherungsbewusstseinsvorrichtung (101; 200) und mindestens einer der benachbarten Vorrichtungen (102, 103, 104) zu bestimmen; und
- einen zweiten Sendeempfänger (202), der dazu konfiguriert ist, ein Erkennungsprotokoll zu implementieren, um ein Vorhandensein der benachbarten Vorrichtungen (102, 103, 104) zu erkennen, wobei der zweite Sendeempfänger (202) weniger Leistung verbraucht als der erste Sendeempfänger (201),
- wobei der erste Sendeempfänger (201) so gesteuert wird, dass er gemäß einem ersten Arbeitszyklus (321, 322; 421, 422) arbeitet, und
- wobei der zweite Sendeempfänger (202) so gesteuert wird, dass er gemäß einem zweiten Arbeitszyklus (323, 324; 423, 424) arbeitet,
und wobei der zweite Sendeempfänger (202) zum Implementieren des Erkennungsprotokolls dazu konfiguriert ist, die folgenden Schritte innerhalb eines Konkurrenzfensters (300; 400) durchzuführen:
- Übertragen eines Sondensignals (332; 432), das mindestens Zeitgebungsinformationen für ein Ankündigungssignal (335; 436) oder für ein Reichweitenmessfenster umfasst, nach einem zufälligen Wartezeitraum (331; 431) innerhalb des Konkurrenzfensters (300; 400);
- Bestimmen eines Reichweitenmesszeitplans durch Priorisieren erkannter benachbarter Vorrichtungen (N1, N2, N3) und Zuweisen von priorisierten benachbarten Vorrichtungen (N1, N2) zu jeweiligen Zeitspannen (TS2, TS4) in einem Reichweitenmessfenster (301; 401); und
- Übertragen des Ankündigungssignals (335; 436) zu einem Zeitpunkt, der den Zeitgebungsinformationen entspricht, oder zusammen mit dem Sondensignal, wobei die Ankündigungsnachricht (335; 436) mindestens den Reichweitenmesszeitplan umfasst
oder alternativ:
- Empfangen eines Sondensignals von einer benachbarten Vorrichtung (N1, N2, N3) vor dem zufälligen Wartezeitraum (331; 431);
- Extrahieren von Zeitgebungsinformationen aus dem Sondensignal für ein Ankündigungssignal, das von der benachbarten Vorrichtung (N1, N2, N3) zu empfangen ist, oder für ein Reichweitenmessfenster;
- Empfangen des Ankündigungssignals von der benachbarten Vorrichtung zu einem Zeitpunkt, der den Zeitgebungsinformationen entspricht, oder zusammen mit dem Sondensignal, und
- Extrahieren eines Reichweitenmesszeitplans aus dem Ankündigungssignal für eine Vielzahl von priorisierten benachbarten Vorrichtungen (N1,N2), die durch die benachbarte Vorrichtung (N1, N2, N3) durch Priorisieren erkannter benachbarter Vorrichtung (N1,N2,N3) bestimmt wird, und Zuweisen jeweiliger Zeitspannen (TS2, TS4) in einem Reichweitenmessfenster (301;401) zu priorisierten benachbarten Vorrichtungen (N1,N2).

2. Näherungsbewusstseinsvorrichtung (101; 200) nach Anspruch 1, wobei der zweite Arbeitszyklus (323, 324; 423, 424) mindestens auf Grundlage einer minimalen Erkennungsrate konfiguriert ist, die aus Anwendungsanforderungen einer Anwendung abgeleitet wird, in der die Näherungsbewusstseinsvorrichtung (101; 200) verwendet wird.

3. Näherungsbewusstseinsvorrichtung (101; 200) nach Anspruch 1 oder Anspruch 2, wobei der zweite Arbeitszyklus (323, 324; 423, 424) auf Grundlage einer Kombination aus einem oder mehreren von Folgendem konfiguriert ist:
- der Art der Näherungsbewusstseinsvorrichtung (101; 200);
- der Anwendung, bei der die Näherungsbewusstseinsvorrichtung (101; 200) verwendet wird;
- der Bewegungsgeschwindigkeit der Näherungsbewusstseinsvorrichtung (101; 200);
- eines Aktivitätsniveaus der Näherungsbewusstseinsvorrichtung (101; 200);
- einer vorherigen Bestimmung der Entfernung zwischen der Näherungsbewusstseinsvorrichtung (101; 200) und den benachbarten Vorrichtungen (N1, N2, N3);
- einer relativen Entfernungszunahme oder -abnahme zwischen der Näherungsbewusstseinsvorrichtung (101; 200) und einer oder mehreren benachbarten Vorrichtungen (N1, N2, N3);
- einer Dauer seit einer vorherigen Bestimmung der Entfernung zwischen der Näherungsbewusstseinsvorrichtung (101; 200) und den benachbarten Vorrichtungen (N1, N2, N3).

4. Näherungsbewusstseinsvorrichtung (101; 200) nach Anspruch 1, wobei der zweite Sendeempfänger (202) dazu konfiguriert ist, zwischen der Übertragung des Sondensignals (332) und der Übertragung des Ankündigungssignals (335) in einem Niedrigleistungsmodus zu arbeiten.

5. Näherungsbewusstseinsvorrichtung (101; 200) nach einem der vorhergehenden Ansprüche, wobei der zweite Sendeempfänger (202) auf Grundlage der aus dem Sondensignal extrahierten Zeitgebungsinformationen dynamisch angepasst ist, um zwischen dem Empfangen des Sondensignals und dem Empfangen des Ankündigungssignals in einem Niedrigleistungsmodus zu arbeiten.

6. Näherungsbewusstseinsvorrichtung (101; 200) nach einem der vorhergehenden Ansprüche, wobei der zweite Sendeempfänger (202) zum Implementieren des Erkennungsprotokolls ferner zu Folgendem konfiguriert ist:
- Übertragen des Sondensignals (435) abhängig von dem Arbeitszyklus des Empfängers in dem zweiten Sendeempfänger der benachbarten Vorrichtungen (102, 103, 104) mehrmals innerhalb des Konkurrenzintervalls (400), wobei das Sondensignal eine vorbestimmte zeitliche Länge (433) aufweist.

7. Näherungsbewusstseinsvorrichtung (101; 200) nach Anspruch 6, wobei der zweite Sendeempfänger (202) zu Folgendem konfiguriert ist:
- Abhören zu Abhörinstanzen, wobei die Zeit (437) zwischen aufeinanderfolgenden Abhörinstanzen die vorbestimmte zeitliche Länge (433) des Sondensignals nicht überschreitet;
- Arbeiten in einem Niedrigleistungsmodus zwischen den Abhörinstanzen, solange die zu einer Abhörinstanz empfangene Energie unter einem vorbestimmten Energieschwellenwert bleibt und solange kein Ankündigungssignal erwartet wird;
- Arbeiten in einem Modus mit voller Leistung, um eine weitere Übertragung des Sondensignals (435) zu empfangen, wenn die zu einer Abhörinstanz empfangene Energie den vorbestimmten Energieschwellenwert überschreitet.

8. Näherungsbewusstseinsvorrichtung (101; 200) nach einem der vorhergehenden Ansprüche, wobei der zufällige Wartezeitraum (331; 431) zufällig zwischen einer minimalen Zeitperiode und einer maximalen Zeitperiode bestimmt wird, wobei die minimale Zeitperiode und die maximale Zeitperiode auf Grundlage einer Kombination aus einem oder mehreren von Folgendem konfiguriert oder dynamisch angepasst sind:
- der Art der Näherungsbewusstseinsvorrichtung (101; 200);
- der Anwendung, bei der die Näherungsbewusstseinsvorrichtung (101; 200) verwendet wird;
- der Bewegungsgeschwindigkeit der Näherungsbewusstseinsvorrichtung (101; 200);
- eines Aktivitätsniveaus der Näherungsbewusstseinsvorrichtung (101; 200);
- einer vorherigen Bestimmung der Entfernung zwischen der Näherungsbewusstseinsvorrichtung (101; 200) und den benachbarten Vorrichtungen (N1, N2, N3);
- einer relativen Entfernungszunahme oder -abnahme zwischen der Näherungsbewusstseinsvorrichtung (101; 200) und einer oder mehreren benachbarten Vorrichtungen (N1, N2, N3);
- einer Dauer seit einer vorherigen Bestimmung der Entfernung zwischen der Näherungsbewusstseinsvorrichtung (101; 200) und den benachbarten Vorrichtungen (N1, N2, N3).

9. Näherungsbewusstseinsvorrichtung nach einem der vorhergehenden Ansprüche, wobei das Sondensignal (332; 432; 435) beim Übertragen des Sondensignals ferner eine Kombination aus einem oder mehreren der folgenden Daten umfasst:
- einer Kennung der Näherungsbewusstseinsvorrichtung (101; 200);
- einer Art der Näherungsbewusstseinsvorrichtung (101; 200);
- einem Profil der Näherungsbewusstseinsvorrichtung (101; 200);
- einer Anwendung, bei der die Näherungsbewusstseinsvorrichtung (101; 200) verwendet wird;
- Arbeitszyklusinformationen für die Näherungsbewusstseinsvorrichtung (101; 200);
- der Geschwindigkeit der Näherungsbewusstseinsvorrichtung (101; 200);
- eines Aktivitätsniveaus der Näherungsbewusstseinsvorrichtung (101; 200);
- eines Geräuschpegels, der in der Nähe der Näherungsbewusstseinsvorrichtung (101; 200) gemessen wird;
- einer Benutzergruppe, die der Näherungsbewusstseinsvorrichtung (101; 200) zugeordnet ist,
- eines Vorhandenseins eines oder mehrerer Zertifikate auf der Näherungsbewusstseinsvorrichtung (101; 200).

10. Näherungsbewusstseinsvorrichtung (101; 200) nach einem der vorhergehenden Ansprüche, wobei das Ankündigungssignal (335; 436) beim Übertragen des Ankündigungssignals ferner eine Kombination aus einem oder mehreren der folgenden Daten umfasst:
- einer Kennung der Näherungsbewusstseinsvorrichtung (101; 200);
- einer Art der Näherungsbewusstseinsvorrichtung (101; 200);
- einem Profil der Näherungsbewusstseinsvorrichtung (101; 200);
- Arbeitszyklusinformationen für die Näherungsbewusstseinsvorrichtung (101; 200);
- der Geschwindigkeit der Näherungsbewusstseinsvorrichtung (101; 200);
- eines Aktivitätsniveaus der Näherungsbewusstseinsvorrichtung (101; 200);
- eines Geräuschpegels, der in der Nähe der Näherungsbewusstseinsvorrichtung (101; 200) gemessen wird;
- einer Benutzergruppe, die der Näherungsbewusstseinsvorrichtung (101; 200) zugeordnet ist,
- eines Vorhandenseins eines oder mehrerer Zertifikate auf der Näherungsbewusstseinsvorrichtung (101; 200);
- einer vorherigen Bestimmung der Entfernung zwischen der Näherungsbewusstseinsvorrichtung (101; 200) und den benachbarten Vorrichtungen (N1, N2, N3);
- einer relativen Entfernungszunahme oder -abnahme zwischen der Näherungsbewusstseinsvorrichtung (101; 200) und einer oder mehreren benachbarten Vorrichtungen (N1, N2, N3);
- einer Dauer seit einer vorherigen Bestimmung der Entfernung zwischen der Näherungsbewusstseinsvorrichtung (101; 200) und den benachbarten Vorrichtungen (N1, N2, N3);
- Kanalinformationen;
- eines Vorhandenseins von Hindernissen zwischen der Näherungsbewusstseinsvorrichtung (101; 200) und einer oder mehreren der benachbarten Vorrichtungen (N1, N2, N3).

11. Näherungsbewusstseinsvorrichtung (101; 200) nach Anspruch 1, wobei der erste Arbeitszyklus (321, 322; 421, 422) pro benachbarter Vorrichtung konfiguriert ist.

12. Näherungsbewusstseinsvorrichtung (101; 200) nach Anspruch 11 wobei der erste Arbeitszyklus (321, 322; 421, 422) auf Grundlage einer Kombination aus einem oder mehreren von Folgendem konfiguriert ist:
- der Art der Näherungsbewusstseinsvorrichtung (101; 200);
- der Anwendung, bei der die Näherungsbewusstseinsvorrichtung (101; 200) verwendet wird;
- der Bewegungsgeschwindigkeit der Näherungsbewusstseinsvorrichtung (101; 200);
- eines Aktivitätsniveaus der Näherungsbewusstseinsvorrichtung (101; 200);
- einer vorherigen Bestimmung der Entfernung zwischen der Näherungsbewusstseinsvorrichtung (101; 200) und den benachbarten Vorrichtungen (N1, N2, N3);
- einer relativen Entfernungszunahme oder -abnahme zwischen der Näherungsbewusstseinsvorrichtung (101; 200) und einer oder mehreren benachbarten Vorrichtungen (N1, N2, N3);
- einer Dauer seit einer vorherigen Bestimmung der Entfernung zwischen der Näherungsbewusstseinsvorrichtung (101; 200) und den benachbarten Vorrichtungen (N1, N2, N3).

13. Näherungsbewusstseinsvorrichtung (101; 200) nach Anspruch 11 oder 12, wobei der erste Sendeempfänger (201) zum Implementieren des Reichweitenmessprotokolls dazu konfiguriert ist, innerhalb eines Reichweitenmessfensters (301; 401) die folgenden Schritte durchzuführen:
- Reichweitenmessung als konkurrenzgewinnende Näherungsbewusstseinsvorrichtung (D1) mit priorisierten benachbarten Vorrichtungen (N1, N2) in den jeweiligen Zeitspannen (TS2, TS4), die diesen zugewiesen sind,
oder
- Reichweitenmessung als priorisierte benachbarte Vorrichtung (N1) mit einer konkurrenzgewinnenden Näherungsbewusstseinsvorrichtung (D1) oder mit einer anderen priorisierten benachbarten Vorrichtung in einer entsprechenden Zeitspanne (TS2), die dieser zugewiesen ist, durch die konkurrierende Näherungsbewusstseinsvorrichtung (D1); und
- Arbeiten in einem Niedrigleistungsmodus in anderen Zeitspannen (TS1, TS3, TS4) des Reichweitenmessfensters (301; 401)
oder
- Arbeiten als nicht konkurrenzgewinnende Näherungsbewusstseinsvorrichtung und nicht priorisierte benachbarte Vorrichtung (N3) in einem Niedrigleistungsmodus in dem gesamten Reichweitenmessfenster (301; 401).

14. Näherungsbewusstseinsvorrichtung (101; 200) nach Anspruch 11, 12 oder 13, wobei der erste Sendeempfänger (201) zum Implementieren des Reichweitenmessprotokolls dazu konfiguriert ist, innerhalb einer Zeitspanne (TS2) des Reichweitenmessfensters (301; 401) die folgenden Schritte durchzuführen:
- Übertragen eines ersten Signals (341) an eine benachbarte Vorrichtung (N1);
- Empfangen eines zweiten Signals (342), das bei Empfang des ersten Signals (341) von der benachbarten Vorrichtung (N1) übertragen wird;
- Übertragen eines dritten Signals (343) an die benachbarte Vorrichtung (N1) bei Empfang des zweiten Signals (342); und
- Bestimmen einer Entfernung zwischen der Näherungsbewusstseinsvorrichtung (101; 200) und der benachbarten Vorrichtung (N1) aus der Umlaufzeit zwischen der Übertragung des ersten Signals (341) und dem Empfang des zweiten Signals (342).

15. Näherungsbewusstseinsvorrichtung (101; 200) nach Anspruch 14, wobei das erste Signal (341) und/oder das zweite Signal (342) und/oder das dritte Signal (343) Funkkonfigurationseinstellungen umfassen, die die Länge einer Präambel, die Modulationsart und die Übertragungsleistung, die pro benachbarter Vorrichtung auf Grundlage der erforderlichen Genauigkeit konfiguriert ist, die Verbindungsqualität, die verfügbaren Energie und die erforderliche messbare Reichweite der Entfernung umfassen.

16. Näherungsbewusstseinsvorrichtung (101; 200) nach Anspruch 1, wobei das Priorisieren entdeckter benachbarter Vorrichtungen und Zuweisen entsprechender Zeitspannen zu priorisierten benachbarten Vorrichtungen in dem Reichweitenmessfenster auf einer Kombination aus einem oder mehreren von Folgendem basiert:
- einer Kennung der Näherungsbewusstseinsvorrichtung (101; 200);
- einer Art der Näherungsbewusstseinsvorrichtung (101; 200);
- einem Profil der Näherungsbewusstseinsvorrichtung (101; 200);
- der Geschwindigkeit der Näherungsbewusstseinsvorrichtung (101; 200);
- eines Aktivitätsniveaus der Näherungsbewusstseinsvorrichtung (101; 200);
- eines Geräuschpegels, der in der Nähe der Näherungsbewusstseinsvorrichtung (101; 200) gemessen wird;
- einer Benutzergruppe, die der Näherungsbewusstseinsvorrichtung (101; 200) zugeordnet ist;
- eines Vorhandenseins eines oder mehrerer Zertifikate auf der Näherungsbewusstseinsvorrichtung (101; 200);
- einer vorherigen Bestimmung der Entfernung zwischen der Näherungsbewusstseinsvorrichtung (101; 200) und den benachbarten Vorrichtungen (N1, N2, N3);
- einer relativen Entfernungszunahme oder -abnahme zwischen der Näherungsbewusstseinsvorrichtung (101; 200) und einer oder mehreren benachbarten Vorrichtungen (N1, N2, N3);
- einer Dauer seit einer vorherigen Bestimmung der Entfernung zwischen der Näherungsbewusstseinsvorrichtung (101; 200) und den benachbarten Vorrichtungen (N1, N2, N3);
- Kanalinformationen;
- eines Vorhandenseins von Hindernissen zwischen der Näherungsbewusstseinsvorrichtung (101; 200) und einer oder mehreren der benachbarten Vorrichtungen (N1, N2, N3);
- Arbeitszyklusinformationen für die benachbarten Vorrichtungen (N1, N2, N3).

17. Näherungsbewusstseinsvorrichtung (101; 200) nach Anspruch 1, wobei das Bestimmen eines Reichweitenmesszeitplans ferner Zuweisen eines oder mehrerer Zeitspannen in dem Reichweitenmessfenster (301; 401) zum Durchführen eines Lokalisierungsprotokolls mit festen Ankerknoten oder benachbarten Knoten umfasst.

18. Näherungsbewusstseinsvorrichtung (101; 200) nach einem der vorhergehenden Ansprüche, wobei der erste Sendeempfänger (201) ein Ultra-Wideband-Sendeempfänger, abgekürzt UWB-Sendeempfänger, ist und der zweite Sendeempfänger (202) ein Bluetooth-Sendeempfänger, abgekürzt BLE-Sendeempfänger, ist.

19. Näherungsbewusstseinsvorrichtung (101; 200) nach einem der vorhergehenden Ansprüche, wobei das Erkennungsprotokoll und/oder das Reichweitenmessprotokoll mit der Fine-Ranging-Paketformatierung, abgekürzt FiRa-Paketformatierung, kompatibel sind/ist.

## Revendications

1. Dispositif de sensibilisation à la proximité (101; 200) adapté pour établir une sensibilisation à la proximité sur des dispositifs voisins (102, 103, 104) similaires audit dispositif de sensibilisation à la proximité (101 ; 200), ledit dispositif de sensibilisation à la proximité (101, 200) comprenant :
- un premier émetteur-récepteur (201) configuré pour mettre en oeuvre un protocole de télémétrie pour déterminer une distance et/ou un angle entre ledit dispositif de sensibilisation à la proximité (101 ; 200) et au moins un desdits dispositifs voisins (102, 103, 104) ; et
- un deuxième émetteur-récepteur (202) configuré pour mettre en oeuvre un protocole de découverte pour découvrir la présence desdits dispositifs voisins (102, 103, 104), ledit deuxième émetteur-récepteur (202) consommant moins d'énergie que ledit premier émetteur-récepteur (201),
- dans lequel ledit premier émetteur-récepteur (201) est commandé pour fonctionner selon un premier cycle de service (321, 322 ; 421, 422) ; et
- dans lequel ledit deuxième émetteur-récepteur (202) est commandé pour fonctionner selon un deuxième cycle de service (323, 324 ; 423, 424),
et dans lequel afin de mettre en oeuvre ledit protocole de découverte, ledit deuxième émetteur-récepteur (202) est configuré pour effectuer dans une fenêtre de contention (300 ; 400) les étapes suivantes :
- transmettre après une période d'attente aléatoire (331 ; 431) dans ladite fenêtre de contention (300 ; 400) un signal de sonde (332 ; 432) comprenant au moins des informations de synchronisation pour un signal d'annonce (335 ; 436) ou pour une fenêtre de télémétrie ;
- déterminer un programme de télémétrie en donnant la priorité aux dispositifs voisins découverts (N1, N2, N3) et en attribuant aux dispositifs voisins prioritaires (N1, N2) des temps de base respectifs (TS2, TS4) dans une fenêtre de télémétrie (301 ; 401) ; et
- transmettre ledit signal d'annonce (335 ; 436) à un instant correspondant auxdites informations de synchronisation ou conjointement avec ledit signal de sonde, ledit message d'annonce (335 ; 436) comprenant au moins ledit programme de télémétrie,
ou en variante :
- recevoir un signal de sonde provenant d'un dispositif voisin (N1, N2, N3) avant ladite période d'attente aléatoire (331 ; 431) ;
- extraire dudit signal de sonde des informations de synchronisation pour un signal d'annonce à recevoir dudit dispositif voisin (N1, N2, N3) ou pour une fenêtre de télémétrie ;
- recevoir ledit signal d'annonce en provenance dudit dispositif voisin à un instant correspondant auxdites informations de synchronisation ou conjointement avec ledit signal de sonde ; et
- extraire dudit signal d'annonce un programme de télémétrie pour une pluralité de dispositifs voisins prioritaires (N1, N2) déterminés par ledit dispositif voisin (N1, N2, N3) en donnant la priorité aux dispositifs voisins découverts (N1, N2, N3) et en attribuant aux dispositifs voisins prioritaires (N1, N2) des temps de base respectifs (TS2, TS4) dans une fenêtre de télémétrie (301 ; 401).

2. Dispositif de sensibilisation à la proximité (101 ; 200) selon la revendication 1, dans lequel ledit deuxième cycle de service (323, 324 ; 423, 424) est configuré au moins sur la base d'un taux de découverte minimum dérivé des exigences d'application d'une application dans laquelle ledit dispositif de sensibilisation à la proximité (101 ; 200) est utilisé.

3. Dispositif de sensibilisation à la proximité (101 ; 200) selon la revendication 1 ou la revendication 2, dans lequel ledit deuxième cycle de service (323, 324 ; 423, 424) est configuré sur la base d'une combinaison d'un ou plusieurs parmi :
- le type dudit dispositif de sensibilisation à la proximité (101 ; 200) ;
- l'application dans laquelle ledit dispositif de sensibilisation à la proximité (101 ; 200) est utilisé ;
- la vitesse de déplacement dudit dispositif de sensibilisation à la proximité (101 ; 200) ;
- un niveau d'activité dudit dispositif de sensibilisation à la proximité (101 ; 200) ;
- une détermination préalable de la distance entre ledit dispositif de sensibilisation à la proximité (101 ; 200) et lesdits dispositifs voisins (N1, N2, N3) ;
- une augmentation ou une diminution de distance relative entre ledit dispositif de sensibilisation à la proximité (101 ; 200) et un ou plusieurs dispositifs voisins (N1, N2, N3) ;
- durée depuis une détermination précédente de distance entre ledit dispositif de sensibilisation à la proximité (101 ; 200) et lesdits dispositifs voisins (N1, N2, N3).

4. Dispositif de sensibilisation à la proximité (101 ; 200) selon la revendication 1, dans lequel ledit deuxième émetteur-récepteur (202) est configuré pour fonctionner dans un mode basse consommation entre la transmission dudit signal de sonde (332) et la transmission dudit signal d'annonce (335).

5. Dispositif de sensibilisation à la proximité (101 ; 200) selon l'une des revendications précédentes, dans lequel ledit deuxième émetteur-récepteur (202) est adapté dynamiquement, sur la base desdites informations de synchronisation extraites dudit signal de sonde, pour fonctionner dans un mode basse consommation entre la réception dudit signal de sonde et la réception dudit signal d'annonce.

6. Dispositif de sensibilisation à la proximité (101 ; 200) selon l'une des revendications précédentes, dans lequel, afin de mettre en oeuvre ledit protocole de découverte, ledit deuxième émetteur-récepteur (202) est en outre configuré pour :
- transmettre ledit signal de sonde (435) plusieurs fois dans ledit intervalle de contention (400) en fonction du cycle de service du récepteur dans le deuxième émetteur-récepteur desdits dispositifs voisins (102, 103, 104), ledit signal de sonde comportant une longueur prédéterminée (433) dans le temps.

7. Dispositif de sensibilisation à la proximité (101 ; 200) selon la revendication 6, dans lequel ledit deuxième émetteur-récepteur (202) est configuré pour :
- écouter à des instants d'écoute, le temps (437) entre des instants d'écoute successifs ne dépassant pas ladite longueur dans le temps prédéterminée (433) dudit signal de sonde ;
- fonctionner en mode basse consommation entre les instants d'écoute tant que l'énergie reçue à un instant d'écoute reste inférieure à un seuil d'énergie prédéterminé et tant qu'aucun signal d'annonce n'est attendu ;
- fonctionner en mode pleine puissance pour recevoir une nouvelle transmission dudit signal de sonde (435) lorsque l'énergie reçue à un instant d'écoute dépasse ledit seuil d'énergie prédéterminé.

8. Dispositif de sensibilisation à la proximité (101 ; 200) selon l'une des revendications précédentes, dans lequel ladite période d'attente aléatoire (331 ; 431) est déterminée de manière aléatoire entre une période de temps minimale et une période de temps maximale, ladite période de temps minimale et ladite période de temps maximale étant configurées ou étant adaptées dynamiquement sur la base d'une combinaison d'un ou plusieurs parmi :
- le type dudit dispositif de sensibilisation à la proximité (101 ; 200) ;
- l'application dans laquelle ledit dispositif de sensibilisation à la proximité (101 ; 200) est utilisé ;
- la vitesse de déplacement dudit dispositif de sensibilisation à la proximité (101 ; 200) ;
- un niveau d'activité dudit dispositif de sensibilisation à la proximité (101 ; 200) ;
- une détermination préalable de distance entre ledit dispositif de sensibilisation à la proximité (101 ; 200) et lesdits dispositifs voisins (N1, N2, N3) ;
- une augmentation ou diminution de distance relative entre ledit dispositif de sensibilisation à la proximité (101 ; 200) et un ou plusieurs dispositifs voisins (N1, N2, N3) ;
- durée depuis une détermination précédente de distance entre ledit dispositif de sensibilisation à la proximité (101 ; 200) et lesdits dispositifs voisins (N1, N2, N3).

9. Dispositif de sensibilisation à la proximité selon l'une des revendications précédentes, dans lequel, lors de la transmission du signal de sonde, ledit signal de sonde (332 ; 432 ; 435) comprend en outre une combinaison d'une ou plusieurs des données suivantes :
- un identifiant dudit dispositif de sensibilisation à la proximité (101 ; 200) ;
- un type dudit dispositif de sensibilisation à la proximité (101 ; 200) ;
- un profil dudit dispositif de sensibilisation à la proximité (101 ; 200) ;
- une application dans laquelle ledit dispositif de sensibilisation à la proximité (101 ; 200) est utilisé ;
- des informations de cycle de service pour ledit dispositif de sensibilisation à la proximité (101 ; 200) ;
- la vitesse dudit dispositif de sensibilisation à la proximité (101 ; 200) ;
- un niveau d'activité dudit dispositif de sensibilisation à la proximité (101 ; 200) ;
- un niveau de bruit mesuré au voisinage dudit dispositif de sensibilisation à la proximité (101 ; 200) ;
- un groupe d'utilisateurs associé audit dispositif de sensibilisation à la proximité (101 ; 200) ;
- présence d'un ou plusieurs certificats sur ledit dispositif de sensibilisation à la proximité (101 ; 200).

10. Dispositif de sensibilisation à la proximité (101 ; 200) selon l'une des revendications précédentes, dans lequel lors de la transmission du signal d'annonce, ledit signal d'annonce (335 ; 436) comprend en outre une combinaison d'une ou plusieurs des données suivantes :
- un identifiant dudit dispositif de sensibilisation à la proximité (101 ; 200) ;
- un type dudit dispositif de sensibilisation à la proximité (101 ; 200) ;
- un profil dudit dispositif de sensibilisation à la proximité (101 ; 200) ;
- des informations de cycle de service pour ledit dispositif de sensibilisation à la proximité (101 ; 200) ;
- la vitesse dudit dispositif de sensibilisation à la proximité (101 ; 200) ;
- un niveau d'activité dudit dispositif de sensibilisation à la proximité (101 ; 200) ;
- un niveau de bruit mesuré au voisinage dudit dispositif de sensibilisation à la proximité (101 ; 200) ;
- un groupe d'utilisateurs associé audit dispositif de sensibilisation à la proximité (101 ; 200) ;
- présence d'un ou plusieurs certificats sur ledit dispositif de sensibilisation à la proximité (101 ; 200) ;
- une détermination préalable de distance entre ledit dispositif de sensibilisation à la proximité (101 ; 200) et lesdits dispositifs voisins (N1, N2, N3) ;
- une augmentation ou diminution de distance relative entre ledit dispositif de sensibilisation à la proximité (101 ; 200) et un ou plusieurs dispositifs voisins (N1, N2, N3) ;
- durée depuis une détermination précédente de distance entre ledit dispositif de sensibilisation à la proximité (101 ; 200) et lesdits dispositifs voisins (N1, N2, N3) ;
- des informations de canal ;
- présence d'obstacles entre ledit dispositif de sensibilisation à la proximité (101 ; 200) et un ou plusieurs desdits dispositifs voisins (N1, N2, N3).

11. Dispositif de sensibilisation à la proximité (101 ; 200) selon la revendication 1, dans lequel ledit premier cycle de service (321, 322 ; 421,422) est configuré pour chaque dispositif voisin.

12. Dispositif de sensibilisation à la proximité (101 ; 200) selon la revendication 11, dans lequel ledit premier cycle de service (321, 322 ; 421, 422) est configuré sur la base d'une combinaison d'un ou plusieurs parmi :
- le type dudit dispositif de sensibilisation à la proximité (101 ; 200) ;
- l'application dans laquelle ledit dispositif de sensibilisation à la proximité (101 ; 200) est utilisé ;
- la vitesse de déplacement dudit dispositif de sensibilisation à la proximité (101 ; 200) ;
- un niveau d'activité dudit dispositif de sensibilisation à la proximité (101 ; 200) ;
- une détermination préalable de distance entre ledit dispositif de sensibilisation à la proximité (101 ; 200) et lesdits dispositifs voisins (N1, N2, N3) ;
- une augmentation ou diminution de distance relative entre ledit dispositif de sensibilisation à la proximité (101 ; 200) et un ou plusieurs dispositifs voisins (N1, N2, N3) ;
- une durée depuis une détermination précédente de distance entre ledit dispositif de sensibilisation à la proximité (101 ; 200) et lesdits dispositifs voisins (N1, N2, N3).

13. Dispositif de sensibilisation à la proximité (101 ; 200) selon la revendication 11 ou 12, dans lequel, afin de mettre en oeuvre ledit protocole de télémétrie, ledit premier émetteur-récepteur (201) est configuré pour effectuer dans une fenêtre de télémétrie (301 ; 401) les étapes suivantes :
- classer en tant que dispositif de sensibilisation à la proximité gagnant de la contention (D1) avec des dispositifs voisins prioritaires (N1, N2) dans lesdits temps de base respectifs (TS2, TS4) qui leur sont attribués,
ou
- classer en tant que dispositif voisin prioritaire (N1) avec un dispositif de sensibilisation à la proximité gagnant de la contention (D1) ou avec un autre dispositif voisin prioritaire dans un temps de base respectif (TS2) qui lui est attribué par ledit dispositif de sensibilisation à la proximité gagnant la contention (D1) ; et
- fonctionner en mode basse consommation dans d'autres temps de base (TS1, TS3, TS4) de ladite fenêtre de télémétrie (301 ; 401),
ou
- fonctionner en tant que dispositif de proximité ne gagnant pas la contention et en tant que dispositif voisin non prioritaire (N3) dans un mode basse consommation tout au long de ladite fenêtre de télémétrie (301 ; 401).

14. Dispositif de sensibilisation à la proximité (101 ; 200) selon la revendication 11, 12 ou 13, dans lequel, afin de mettre en oeuvre ledit protocole de télémétrie, ledit premier émetteur-récepteur (201) est configuré pour effectuer dans un temps de base (TS2) de ladite fenêtre de télémétrie (301 ; 401) les étapes suivantes :
- transmettre un premier signal (341) à un dispositif voisin (N1) ;
- recevoir un deuxième signal (342) transmis par ledit dispositif voisin (N1) lors de la réception dudit premier signal (341) ;
- transmettre un troisième signal (343) audit dispositif voisin (N1) à la réception dudit deuxième signal (342) ; et
- déterminer une distance entre ledit dispositif de sensibilisation à la proximité (101 ; 200) et ledit dispositif voisin (N1) à partir du temps aller-retour entre la transmission dudit premier signal (341) et la réception dudit deuxième signal (342).

15. Dispositif de sensibilisation à la proximité (101 ; 200) selon la revendication 14, dans lequel ledit premier signal (341) et/ou ledit deuxième signal (342) et/ou ledit troisième signal (343) comprennent des paramètres de configuration radio comprenant la longueur d'un préambule, le type de modulation et la puissance de transmission qui est configurée par un dispositif voisin en fonction de la précision requise, de la qualité de la liaison, de l'énergie disponible et de la plage mesurable requise de ladite distance.

16. Dispositif de sensibilisation à la proximité (101 ; 200) selon la revendication 1, dans lequel la priorisation des dispositifs voisins découverts et l'attribution aux dispositifs voisins prioritaires de temps de base respectifs dans ladite fenêtre de télémétrie sont basées sur une combinaison d'un ou plusieurs parmi :
- un identifiant dudit dispositif de sensibilisation à la proximité (101 ; 200) ;
- un type dudit dispositif de sensibilisation à la proximité (101 ; 200) ;
- un profil dudit dispositif de sensibilisation à la proximité (101 ; 200) ;
- la vitesse dudit dispositif de sensibilisation à la proximité (101 ; 200) ;
- un niveau d'activité dudit dispositif de sensibilisation à la proximité (101 ; 200) ;
- un niveau de bruit mesuré au voisinage dudit dispositif de sensibilisation à la proximité (101 ; 200) ;
- un groupe d'utilisateurs associé audit dispositif de sensibilisation à la proximité (101 ; 200) ;
- présence d'un ou plusieurs certificats sur ledit dispositif de sensibilisation à la proximité (101 ; 200) ;
- une détermination préalable de distance entre ledit dispositif de sensibilisation à la proximité (101 ; 200) et lesdits dispositifs voisins (N1, N2, N3) ;
- une augmentation ou diminution de distance relative entre ledit dispositif de sensibilisation à la proximité (101 ; 200) et un ou plusieurs dispositifs voisins (N1, N2, N3) ;
- durée depuis une détermination précédente de distance entre ledit dispositif de sensibilisation à la proximité (101 ; 200) et lesdits dispositifs voisins (N1, N2, N3) ;
- des informations de canal ;
- présence d'obstacles entre ledit dispositif de sensibilisation à la proximité (101 ; 200) et un ou plusieurs desdits dispositifs voisins (N1, N2, N3) ;
- des informations de cycle de service pour lesdits dispositifs voisins (N1, N2, N3).

17. Dispositif de sensibilisation à la proximité (101 ; 200) selon la revendication 1, dans lequel la détermination d'un programme de télémétrie comprend en outre l'attribution d'un ou plusieurs temps de base dans ladite fenêtre de télémétrie (301 ; 401) pour exécuter un protocole de localisation avec des noeuds d'ancrage fixes ou des noeuds voisins.

18. Dispositif de sensibilisation à la proximité (101 ; 200) selon l'une des revendications précédentes, dans lequel ledit premier émetteur-récepteur (201) est un émetteur-récepteur à bande ultra-large, abrégé émetteur-récepteur UWB, et ledit deuxième émetteur-récepteur (202) est un émetteur-récepteur Bluetooth, abrégé émetteur-récepteur BLE.

19. Dispositif de sensibilisation à la proximité (101 ; 200) selon l'une des revendications précédentes, dans lequel ledit protocole de découverte et/ou ledit protocole de télémétrie sont compatibles avec le formatage de paquet Fine Ranging, abrégé formatage de paquet FiRa.
